(19) Europäisches Patentamt
European Patent Office
Office européen des brevets

(11) Veröffentlichungsnummer: **0 017 248**
**B1**

(12) # EUROPÄISCHE PATENTSCHRIFT

(45) Veröffentlichungstag der Patentschrift: **25.07.84**

(21) Anmeldenummer: **80101857.3**

(22) Anmeldetag: **08.04.80**

(51) Int. Cl.³: **C 08 G 59/18,**
C 08 L 63/00, C 09 D 3/49,
C 09 D 5/40, C 25 D 13/06

(54) **Selbstvernetzende kationische Bindemittel und Verfahren zu ihrer Herstellung.**

(30) Priorität: **09.04.79 DE 2914331**
**07.03.80 DE 3008810**

(43) Veröffentlichungstag der Anmeldung:
**15.10.80 Patentblatt 80/21**

(45) Bekanntmachung des Hinweises auf die Patenterteilung:
**25.07.84 Patentblatt 84/30**

(84) Benannte Vertragsstaaten:
**AT BE CH DE FR GB IT LI NL SE**

(56) Entgegenhaltungen:
**US - A - 3 716 402**
**US - A - 3 984 299**

(73) Patentinhaber: **BASF Aktiengesellschaft**
**Carl-Bosch-Strasse 38**
**D-6700 Ludwigshafen (DE)**

(72) Erfinder: **Kempter, Fritz Erdmann, Dr.**
**L 2,14**
**D-6800 Mannheim (DE)**
Erfinder: **Schupp, Eberhard, Dr.**
**Tilsiter Weg 4**
**D-6830 Schwetzingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 017 248 B1

**Beschreibung**

Die vorliegende Erfindung betrifft selbstvernetzende kationische Bindemittel, ein Verfahren zu ihrer Herstellung und ihre Verwendung zur Herstellung wasserverdünnbarer Beschichtungsmittel, insbesondere ihre Verwendung in protonierter Form als Bindemittel für die kathodische Elektrotauchlackierung metallischer Gegenstände.

Oberflächenbeschichtungsmittel für das Verfahren der kathodischen Elektrotauchlackierung auf der Basis von Reaktionsprodukten von Epoxidverbindungen mit primären und/oder sekundären Aminen sind seit langem bekannt und werden nach den verschiedensten Modifizierungsverfahren zur Herstellung von kathodisch abscheidbaren Elektrotauchlacken eingesetzt.

Im Gegensatz zur Umsetzung von Epoxidverbindungen mit primären oder sekundären Aminen fand die Reaktion mit Ammoniak im Zusammenhang mit Bindemitteln für die Elektrotauchlackierung bisher keine Erwähnung.

Bezüglich der Reaktion zwischen Polyepoxiden und Ammoniak selbst lassen sich in der Literatur auch nur wenige Hinweise finden.

In der DE—OS 14 95 537 wird z.B. die Umsetzung von Epoxidverbindungen in Anwesenheit von Emulgatoren und/oder Schutzkolloiden mit Ammoniak beschrieben.

Die JA—PS 026 341 bezieht sich auf die Umsetzung von Diepoxidverbindungen mit wässrigem Ammoniak in acetonischer Lösung unter Bildung von 1,4-Bis(2-hydroxy-3-aminopropoxy)-benzol mit einem Schmelzpunkt von 128 bis 132°C.

Nach der US—PS 19 47 879 werden ebenfalls Di-primäre-Aminoverbindungen der folgenden Formel erhalten.

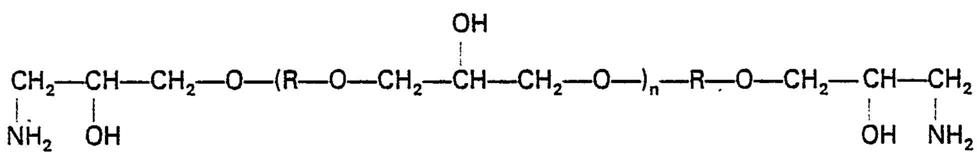

Die Produkte sollen gemäß dieser US—PS zusammen mit Diglycidylestern aus Dicarbonsäuren als Epoxid-Härtungsmittel verwendet werden.

Diese Produkte werden als ausschließlich primäre Aminogruppen enthaltende Verbindungen beschrieben.

Zu diesen Produkten kommt man, wenn die Umsetzung von Diepoxiden mit einem großen Überschuß an Ammoniak durchgeführt wird. Die bereits zitierte US—PS 19 47 879 nennt z.B. einen Überschuß von 25 bis 50 Molen Ammoniak bezogen auf eine Epoxidgruppe.

In der US—PS 3 716 402 werden Umsetzungsprodukte von Epoxidharzen mit primären Aminen beschrieben. Als primäres Amin wird hier zwar auch Ammoniak genannt, doch soll hier pro Mol Amin jeweils 1 Äquivalent Epoxid vorhanden sein, was zu einer Vernetzung des Ansatzes bei Verwendung von Ammoniak als Amin führt.

Kationische Bindemittel für die Elektrotauchlackierung, die selbstvernetzende Harze mit blockierten Isocyanatgruppen und Amino- bzw. Hydroxylgruppen enthalten, sind z.B. in der DE—AS 22 52 536, den DE—OS 22 65 195, 26 03 666, 25 41 234, 27 33 188 und 27 15 259 beschrieben worden bzw. in Patentanmeldung P 28 45 988.3 vorgeschlagen.

In US—A—3 984 299 wird ein Verfahren zur kathodischen Elektrotauchlackierung unter Verwendung eines Gemisches aus einem hydroxylgruppenhaltigen Reaktionsprodukt aus primärem oder sekundärem Amin und Polyepoxid und einem verkappten Polyisocyanat beschrieben. In diesem Falle dient das Gemisch aus verkapptem Polyisocyanat und Epoxid-Amin-Addukt als Bindemittel, das erst beim Einbrennen der kataphoretisch abgeschiedenen Beschichtung miteinander reagiert.

Aufgabe der vorliegenden Erfindung ist es, besonders vorteilhafte selbstvernetzende kationische Bindemittel aufzuzeigen.

Aufgabe der vorliegenden Erfindung ist es außerdem, selbstvernetzende kationische Bindemittel und ein vorteilhaftes Verfahren zu ihrer Herstellung aufzuzeigen, welches die primären und/oder sekundären Amino-$\beta$-hydroxyalkylgruppen polymerer Derivate von Epoxyverbindungen bei der Reaktion mit halb- oder teilgeblockten Di- oder Poly-Isocyanaten als basische und reaktive, d.h. der Vernetzungsreaktion mit den geblockten Isocyanatgruppen zugängliche Gruppen unangetastet läßt und so insbesondere die Härtungsgeschwindigkeit der Beschichtungszubereitungen verbessert.

Durch Reaktion von Di- oder Poly-Epoxidverbindungen mit geringen Mengen Ammoniak werden stickstoffhaltige Oligomere bzw. Polymere mit niedrigen Molekulargewichten erhalten, die als Ausgangsprodukte zur Herstellung kathodisch abscheidbarer Bindemittel besonders vorteilhaft verwendet werden können.

Es wurde ferner gefunden, daß die Umsetzung der primären und/oder sekundären Amino-$\beta$-hydroxyalkylgruppen polymerer Derivate von Epoxidverbindungen mit Carbonylverbindung zu den entsprechenden Oxazolidinen den gewünschten Schutz der basischen Aminogruppen vor der Reaktion mit halb- oder teilgeblockten Di- oder Poly-Isocyanaten gewährleistet und daß diese Schutzwirkung

auch auf die aus primären Amino-β-hydroxyalkylgruppierungen gebildeten NH-Oxazolidine ausgedehnt werden kann, die an sich der Reaktion mit Isocyanaten zugänglich sind, wenn diese NH-Gruppen mit Epoxidverbindungen vorher in N-Hydroxy-alkyloxazolidine überführt werden und nach Umsetzung mit halb- oder teilgeblockten Di- oder Polyisocyanaten die Oxazolidingruppen der selbstvernetzenden Bindemittel nach Protonierung hydrolytisch zerlegt werden. Die abgespaltenen Carbonylverbindungen, sowie gegebenenfalls auch andere Lösungsmittel können dann aus der wäßrigen dispersen Form des Bindemittels entfernt werden. Durch das für die Herstellung der erfindungsgemäßen Bindemittel angewandte Verfahren gelingt es, die Aminogruppen primäre und/oder sekundäre Amino-β-hydroxyalkylgruppen tragender polymerer Derivate von Epoxidverbindungen vor der Reaktion mit Isocyanaten zu schützen und einer nachträglichen Vernetzungsreaktion mit geblockten Isocyanatgruppen offenzuhalten.

Oxazolidingruppen tragende Beschichtungsmittel sind z.B. aus der US—PS 37 43 626, 36 61 923, bzw. DE—OS 24 46 438, 19 52 091, 19 52 092, 20 18 233, 24 46 438, 24 58 588 bekannt, wo feuchtigkeitshärtende Systeme auf der Grundlage der Vernetzung mit Isocyanaten beschrieben sind. Der DE—OS 27 32 131 ist eine Kettenverlängerungsreaktion nach dem Prinzip der Umsetzung von Isocyanatgruppen und Oxazolidingruppen aufweisenden Reaktionssysteme mit Wasser zu entnehmen.

Die DE—AS 14 44 407 beschreibt härtbare, wasserlösliche Umsetzungsprodukte von Epoxidgruppen mit z.B. Ethylendiamin, die nach Protonierung mit wäßrigem Formaldehyd weiter umgesetzt werden. Unter diesen Bedingungen ist eine Oxazolidinbildung nicht möglich. Offensichtlich sollen die Aminogruppen, die der erfindungsgemäßen Reaktion nicht zugänglich sind, in anderer Weise umgesetzt werden. Keine dieser Druckschriften liefert jedoch einen Hinweis, zu kathodisch ablagerbaren Elektrotauchlackbindemitteln zu gelangen.

Gegenstand der vorliegenden Erfindung sind selbstvernetzende kationische Bindemittel für die kathodische Elektrotauchlackierung metallisch leitender Gegenstände, die dadurch gekennzeichnet sind, daß sie durch Umsetzung von

(A) primäre und/oder sekundäre Amino-β-hydroxyalkylgruppen enthaltenden Derivaten von Epoxidverbindungen, wobei die Derivate ein Molekulargewicht zwischen 300 und 5000 aufweisen, und entweder Additionsprodukte ($A^1$) aus Ammoniak und Epoxidverbindungen der allgemeinen Formeln

$$R - E^1 - \left[ NH-E^1 \right]_{n^1} - R \qquad (II),$$

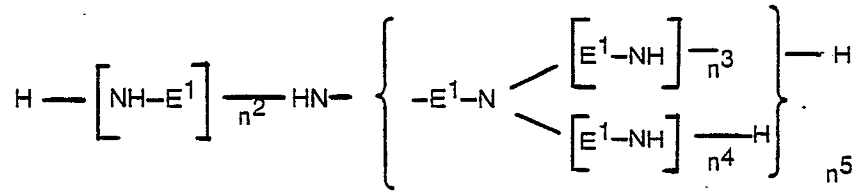

(III)

und/oder

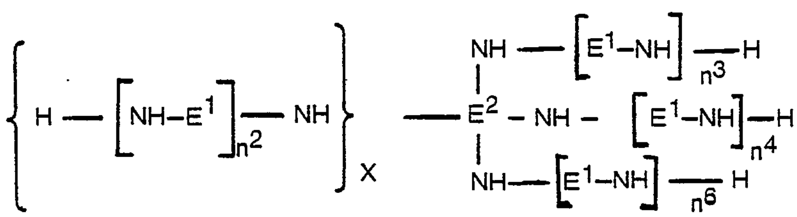

(IV)

worin R für einen S-Alkylrest mit 1 bis 12 Kohlenstoffatomen, einen Phenoxy- oder Alkylphenoxyrest mit 1 bis 18 Kohlenstoffatomen in der Alkylgruppe steht, $E^1$ gleich oder verschiedene hydroxylgruppenhaltige zweiwertige und $E^2$ gleiche oder verschiedene hydroxylgruppenhaltige drei- oder vierwertige Reste sind, wie sie durch Ringöffnung der Oxiranringe von Epoxidverbindungen mit

zwei, drei oder vier Epoxidgruppen im Molekül erhältlich sind und $n^1$ für 1 bis 5; $n^2$, $n^3$, $n^4$ und $n^6$ für 0 bis 3 und $n^5$ für 1 bis 3 stehen, wobei zu deren Herstellung jeweils auf ein Äquivalent Epoxid 1,75 bis 10 Mole Ammoniak eingesetzt worden sind, oder Additionsprodukte ($A^2$) aus Diamin und Epoxidverbindungen der allgemeinen Formeln

$$R—E^1—[NH—R^3—NH—E^1]_{\overline{n^1}}—R \qquad (V)$$

und/oder

$$H_2N—[R^3—NH—E^1—NH]_{\overline{n^1}}—R^3—NH_2 \qquad (VI)$$

worin R, $E^1$ und $n^1$ die oben angegebene Bedeutung haben und $R^3$ für einen geradkettigen, verzweigten oder cyclischen, gegebenenfalls NH- oder Ethergruppen enthaltenden zweiwertigen Kohlenwasserstoffrest mit 2 bis 16 Kohlenstoffatomen steht, sind, mit

(B) voll-, halb- oder teilblockierten Di- oder Polyisocyanaten und gegebenenfalls

(C) Di- oder Polyaminen und Protonierung des Umsetzungsproduktes mit Säure erhalten worden sind, mit der Maßgabe, daß für den Fall, daß als Komponente (A) Additionsprodukte ($A^2$) eingesetzt werden, diese mit halb- oder teilblockierten Di- oder Polyisocyanaten (B) und gegebenenfalls Di- oder Polyaminen (C) umgesetzt werden, die primären und/oder sekundären Amino-$\beta$-hydroxyalkylgruppen der Komponente ($A^2$) vor der Reaktion mit der Komponente (B) mit Carboxylverbindungen der allgemeinen Formel (I)

$$O{=}\overset{\overset{\displaystyle R^1}{|}}{C}—R^2 \qquad (I)$$

wobei $R^1$ und $R^2$ für untereinander gleiche oder verschiedene Reste stehen und Wasserstoff, aliphatische Kohlenwasserstoffreste mit 1 bis 4 Kohlenstoffatomen, cycloaliphatische Kohlenwasserstoffreste mit 5 bis 7 Kohlenstoffatomen oder aromatische Kohlenwasserstoffreste mit 6 bis 10 Kohlenwasserstoffatomen bedeuten oder zusammen mit dem Kohlenstoffatom der Carbonylgruppe miteinander zu einem 5- oder 6-gliedrigen cycloaliphatischen Kohlenwasserstoffring verbunden sind, unter Bildung eines Oxazolidinrings umgesetzt worden sind.

Gegenstand der vorliegenden Erfindung sind auch derartige Bindemittel, in denen die primären und/oder sekundären Amino-$\beta$-hydroxyalkylgruppen der Komponente (A) vor der Umsetzung mit Komponente (B) teilweise mit gesättigten oder ethylenisch ungesättigten Carbonsäuren oder Carbonsäureestern mit 6 bis 24 Kohlenstoffatomen im Acylrest oder Dimerfettsäuren in Amidgruppen überführt worden sind, sowie solche, bei denen ein Teil der primären und/oder sekundären Aminogruppen des Additionsproduktes ($A^1$) aus Ammoniak und Epoxidverbindungen mit Monoglycidylethern aus gesättigten oder olefinisch ungesättigten Alkylphenolen mit 6 bis 18 C-Atomen in der Alkylkette oder Monoglycidylestern von gesättigten oder olefinisch ungesättigten, gegebenenfalls verzweigten Carbonsäuren mit 6 bis 24 C-Atomen im Acylrest umgesetzt worden ist.

Das gegebenenfalls als Komponente (C) mitzuverwendende Di- oder Polyamin weist vorzugsweise 2 bis 20 primäre und/oder sekundäre Aminogruppen auf.

Das Reaktionsprodukt aus (A) und (B) bzw. (A), (B) und (C) weist vorzugsweise Aminzahlen von 10 bis 150, insebesondere 25 bis 75 mg KOH/g Feststoff auf.

Ferner können die durch Umsetzung von primären Amino-$\beta$-hydroxyalkylgruppen der Komponente ($A^1$) mit der Carbonylverbindung (I) erhaltene NH-Gruppen des Oxazolidinrings vor der Reaktion mit der Komponente (B) mit einer Epoxidverbindung, vorzugsweise einer Monoepoxidverbindung umgesetzt werden.

Gegenstand der vorliegenden Erfindung ist außerdem ein Verfahren zur Herstellung der Bindemittel, wobei nach der Umsetzung der Komponente (A) mit der Komponente (B) und gegebenenfalls der Komponente (C) das Umsetzungsprodukt mit einer Carbonsäure protoniert wird und nach Zugabe von Wasser die bei Hydrolyse abgespaltenen Carbonylverbindungen, gegebenenfalls im Gemisch mit organischem Lösungsmittel und unter gleichzeitiger Zufuhr weiteren Wassers, als azeotropes Gemisch mit Wasser destillativ entfernt werden.

Ebenso ist die Verwendung der erfindungsgemäßen Bindemittel für die kathodische Elektrotauchlackierung elektrisch leitender Flächen Gegenstand der vorliegenden Erfindung.

Zu den die selbstvernetzenden Bindemittel aufbauenden Komponenten ist im einzelnen folgendes auszuführen.

Als Epoxidverbindungen kommen für die Herstellung der erfindungsgemäß zu verwendenden Additionsprodukte Epoxidverbindungen mit 2, 3 oder 4 Epoxidgruppen im Molekül in Betracht, beispielsweise Umsetzungsprodukte von mehrwertigen Phenolen, besonders solchen der Formel

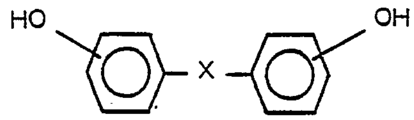

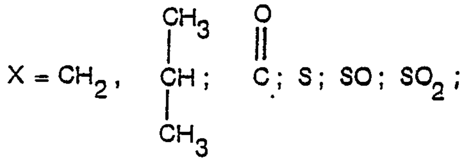

mit Epichlorhydrin bzw. Umsetzungsprodukte anderer Phenole, wie Bis-(4-hydroxy-tert.-butylphenyl)-2-2-propan, Bis(2-hydroxynaphthyl)-methan und 1,5-Dihydroxynaphthalin oder "dimere" und Phenoladdukte des Cardanols (z.B. 3-(8,11)Pentadecadienyl-)-phenol) mit Epichlorhydrin. Aber auch die Reaktionsprodukte von mehrwertigen Alkoholen wie z.B. Äthylenglykol, Diäthylenglykol, Propylenglykole, Bis-(4-hydroxycyclohexyl)-2,2-propan, Pentaerythrit, Dipentaerythrit, Trimethylolpropan, Hexantriol oder Glycerin sowie Sorbit mit Epichlorhydrin sind hierfür geeignet. Andere geeignete Epoxidverbindungen sind epoxidierte Oligo- oder Polybutadiene bzw. -Isoprene, weiterhin Produkte, die epoxidierte Cyclohexenreste enthalten. Epoxidharze aus 1,1-Methylen-Bis-(5-substituiertem) Hydantoin nach der US—PS 3 891 097, Diepoxide aus Bisimiden nach der US—PS 3 450 711, epoxidierte Aminomethyldiphenyloxide nach der US—PS 3 312 664 oder auch 1,3,5-Triglycidylisocyanurat.

Selbstverständlich können verschiedene Epoxidverbindungen miteinander kombiniert werden; z.B. solche auf Basis von Bisphenol A mit unterschiedlichen Epoxidwerten, um bestimmte besonders geeignete Molekulargewichte und/oder Amingehalte einzustellen; oder solche auf Basis von Di- und Polyphenolen mit aliphatischen Epoxidverbindungen um zusätzlich zu solchen modifizierten Produkten zu gelangen, die hinsichtlich ihrer elastischen Eigenschaften in den Reaktionsprodukten (B) und (C) besonders vorteilhaft sind.

Monoepoxide sind z.B. geeignet, wenn sie ein ausreichend hohes Molekulargewicht besitzen, z.B. wenn sie Derivate der obengenannten Epoxide auf Basis von Di- oder Polyphenolen sind, die sich bekanntlich sehr leicht durch Umsetzung mit Monophenolen, Monomercaptanen usw. herstellen lassen. Die Epoxidverbindungen werden mit Ammoniak in solchen Mengenverhältnissen zur Reaktion gebracht, daß auf jede Epoxidgruppe 1,75 bis 10 Mole Ammoniak kommen.

Die Molekulargewichte der erfindungsgemäßen Polyadditionsprodukte liegen im allgemeinen im Bereich zwischen 500 und 5000, entsprechend Aminzahlen zwischen 10 und 275 mg KOH/g Feststoff.

Wird ein hoher bzw. mäßiger Überschuß an Ammoniak bei der Herstellung der erfindungsgemäßen Polyadditionsprodukte angewandt, so werden Produkte erhalten, die ausschließlich primäre bzw. primäre und sekundäre Aminogruppen aufweisen und deren Strukturen sich durch die allgemeine Formel (II) und (III) formal beschreiben lassen, wobei in Formel (III) $n^4 = 0$ ist.

Die Umsetzung von Ammoniak mit den Epoxidverbindungen wird im allgemeinen bei 20°—100°C, vorzugsweise 50—80°C, in drucksicheren Reaktoren bei Drucken von 2—25 bar durchgeführt.

Zweckmäßigerweise führt man die Reaktion in Gegenwart von Lösungsmitteln wie Alkoholen, Glykoläthern, Ketonen, aromatischen, aliphatischen oder cycloaliphatischen Kohlenwasserstoffen, gegebenenfalls auch entsprechenden Lösungsmittelgemischen aus. Bei Einsatz höhersiedender Lösungsmittel brauchen diese nach Ende der Reaktion nicht entfernt zu werden. Sie sollten aber so gewählt werden, daß sie während der Aufarbeitung zur Entfernung überschüssigen Ammoniaks nicht zu Nebenreaktionen führen, bzw. eventuell folgende Reaktionsschritte nicht beeinträchtigen können.

Die Molekulargewichtseinstellung bei der Reaktion Ammoniak/Epoxidverbindungen hängt neben dem Ammoniak/Epoxidgruppen-Verhältnis auch noch vom Grad der Verdünnung ab, bei der die Reaktion durchgeführt wird; mit zunehmender Verdünnung werden Produkte mit niedrigeren Molekulargewichten erhalten.

Im allgemeinen wird zur Durchführung der Reaktion mindestens ein Teil des Lösungsmittels mit dem Ammoniak vorgelegt und das oder die Epoxidverbindungen gegebenenfalls auch stufenweise, nötigenfalls gelöst oder in der Schmelze zudosiert. Zur Entfernung der Lösungsmittel und des überschüssigen Ammoniaks wird anschließend, gegebenenfalls unter vermindertem Druck auf 100—200°C erhitzt.

Ersetzt man bei der Reaktion zur Herstellung der erfindungsgemäß zu verwendenden Additionsprodukte $E^1$ anteilig durch Tri- oder Tetra-Epoxidverbindungen, so werden entsprechend verzweigte Produkte erhalten (vgl. $E^2$ der allgemeinen Formel IV). Über tertiären Stickstoff verzweigte Produkte können bei fortschreitend reduzierten eingesetzten Ammoniakmengen erhalten werden. Ihre Struktur läßt sich durch die allgemeine Formel (III) darstellen, wobei $n^4 > 0$ ist.

Die erfindungsgemäß zu verwendenden Additionsprodukte (A) lassen sich gegebenenfalls durch teilweise oder vollständige Reaktion der primären oder sekundären Aminogruppen mit Carbonsäuren oder Carbonsäureestern gesättigter oder äthylenisch ungesättigter Carbonsäuren mit 6—24 C-Atomen im Acylrest in die entsprechenden Amidgruppen enthaltenden Produkte überführen. Dimere Fettsäuren können dann eingesetzt werden, wenn diese modifizierende Reaktion unter quasi Molekulargewichtsverdoppelung durchgeführt werden soll.

Dasselbe gilt für die Reaktion mit Monoepoxidverbindungen unter Überführung primärer Aminogruppen in sekundäre und Überführung dieser in tertiäre Aminogruppen.

Eingesetzt werden können Monoepoxidverbindungen mit 2 bis 24 Kohlenstoffatomen im Alkylrest, wie z.B. Äthylenoxid, Propylenoxid, Glycid, Butylenoxid u.a. Eine weitere besondere Modifizierungsmöglichkeit besteht in der Umsetzung mit Glycidyläthern gesättigter oder äthylenisch ungesättigter Alkylgruppen enthaltender Alkylphenole mit 6 bis 18 Kohlenstoffatomen in der Alkylkette, wie z.B. Nonylphenol oder Cardanol, welches als im wesentlichen bestehend aus 3-(8,11)-Pentadecadienyl)-phenol beschrieben wird oder Monoglycidylestern von gesättigten oder äthylenisch ungesättigten, gegebenenfalls verzweigten Carbonsäuren mit 6 bis 24 Kohlenstoffatomen im Acylrest.

Epoxid/Ammoniak-Addukte sind u.a. deswegen besonders bevorzugt, weil auf jede gebildete sekundäre Aminogruppe 2 sekundäre OH-Gruppen kommen, auch wenn man von Epoxidverbindungen ausgeht die keine OH-Gruppen im Molekül tragen, so daß nach Bildung des Oxazolidinringes mindestens noch eine dieser OH-Gruppen zur Reaktion mit den Isocyanatgruppen der teilgeblockten Isocyanate zur Verfügung steht. Um die zu Umsetzung mit Isocyanatgruppen notwendigen OH-Gruppen der entsprechenden Epoxid/Diamin-Addukte sicherzustellen, ist es in diesem Fall notwendig

a) entweder OH-Gruppen-haltige Epoxidverbindungen einzusetzen, oder

b) die Oxazolidinringbildung nur teilweise mit den entsprechenden sekundären Amino-$\beta$-hydroxyalkylgruppen durchzuführen.

Eine weitere besondere Modifizierungsmöglichkeit besteht in der Umsetzung mit Glycidyläthern gesättigter oder äthylenisch ungesättigter Alkylgruppen enthaltender Alkylphenole mit 6—18 C-Atomen in der Alkylkette, wie z.B. Nonylphenol oder Cardanol, welches als im wesentlichen bestehend aus 3-(8,11)Pentadecadienyl)-phenol beschrieben wird oder Monoglycidylestern von gesättigten oder äthylenisch ungesättigten, gegebenenfalls verzweigten Carbonsäuren mit 6 bis 24 C-Atomen im Acylrest.

Eine reversible Reaktion der erfindungsgemäß zu verwendenden Polyadditionsprodukte besteht in einer Überführung der primären Aminogruppen mit Ketonen in ihre Ketimine, wobei nach Umsetzung mit teil- oder vollgeblockten Di- oder Polyisocyanten Produkte erhalten werden, die nach Hydrolyse der Ketimingruppen mindestens eine, bevorzugt aber 1,75—2,5 Aminogruppen pro Molekül der Komponente (B) tragen. Sekundäre Aminogruppen können durch Umsetzung mit Aldehyden, wie Formaldehyd oder Isobutyraldehyd, in Oxazolidine überführt und so temporär geschützt werden.

Als primäre und/oder sekundäre Amino-$\beta$-hydroxyalkylgruppen enthaltende Derivte von Epoxidverbindungen mit Molekulargewichten zwischen 300 und 5000 eignen sich beispielsweise Additionsprodukte aus Ammoniak und Epoxidverbindungen der vorgenannten allgemeinen Formeln (II), (III) und (IV) sowie Additionsprodukte aus Diamin und Epoxidverbindungen der allgemeinen Formeln

$$R—E^1—[NH—R^3—NH—E^1]_{n^1}—R \qquad (V)$$

und/oder

$$H_2N'—[R^3—NH—E^1—NH]_{n^1}—R^3—NH_2 \qquad (VI)$$

worin R für einen S-Alkylrest mit 1 bis 12 Kohlenstoffatomen, einen Phenoxy- oder Alkylphenoxyrest mit 1 bis 18 Kohlenstoffatomen in der Alkylgruppe und $R^3$ für einen geradkettigen, verzweigten oder cyclischen, gegebenenfalls NH- oder Äthergruppen enthaltenden zweiwertigen Kohlenwasserstoffrest mit 2 bis 16 Kohlenstoffatomen stehen, $E^1$ für gleiche oder verschiedene hydroxylgruppenhaltige zweiwertige Reste sind, wie sie durch Ringöffnung der Oxiranringe von Epoxidverbindungen mit zwei Epoxidgruppen im Molekül erhältlich sind, und $n^1$ für eine ganze Zahl von 1 bis 5 steht.

Die primären Aminogruppen (—$NH_2$) der Formel (VI) können auch als Ketimingruppen

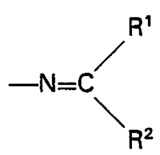

vorliegen, und ein Teil der primären und/oder sekundären Amino-$\beta$-hydroxyalkylgruppen der Formeln (II) bis (VI) kann durch modifizierende Maßnahmen wie die Amidgruppen-bildende Umsetzung mit gesättigten oder äthylenisch ungesättigten Carbonsäuren bzw. ihren Estern oder durch Umsetzung mit Glycidyläthern gesättigter oder äthylenisch ungesättigter Alkylgruppen enthaltender Alkylphenole oder Monoglycidylestern abgewandelt worden sein.

Zur Einführung der Schutzgruppen werden die stickstoffhaltigen Polymeren mit Carbonylverbindungen umgesetzt. Weiter können die aus den endständigen primären Amino-$\beta$-hydroxyalkylgruppen entstandenen NH-Oxazolidingruppen ($R^4 = H$ mit Epoxidverbindungen

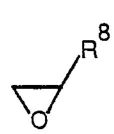

in die entsprechenden N-Hydroxy-alkyloxazolidine (VII) übergeführt werden, wie aus folgendem Reaktionsschema hervorgeht:

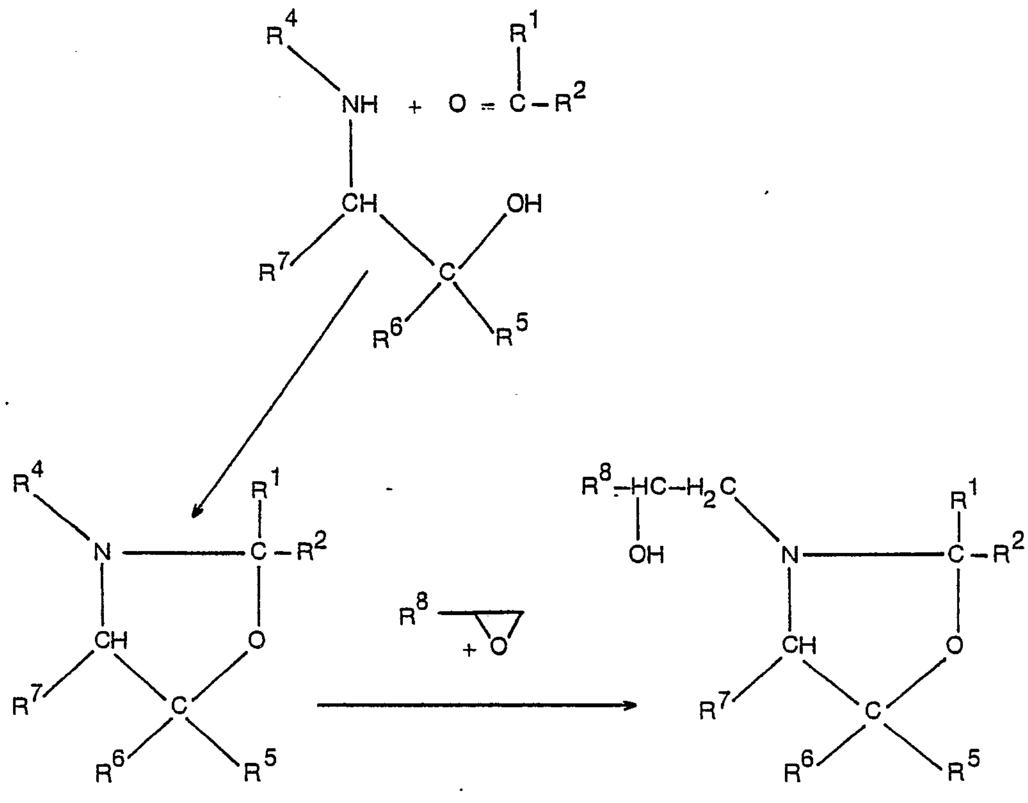

(VII)

wobei $R^1$ mit $R^2$ für untereinander gleiche oder verschiedene Reste stehen und Wasserstoff, aliphatische Kohlenwasserstoffreste mit 1 bis 4 Kohlenstoffatomen, cycloaliphatische Kohlenwasserstoffreste mit 5 bis 7 Kohlenwasserstoffatomen oder aromatische Kohlenwasserstoffreste mit 6 bis 10 Kohlenstoffatomen bedeuten oder zusammen mit dem Kohlenstoffatom der Carbonylgruppe miteinander zu einem 5- oder 6-gliedrigen cycloaliphatischen Kohlenwasserstoffring verbunden sind, $R^4$ und $R^5$ untereinander gleich oder verschieden sind und für Wasserstoff, den durch Ringöffnung des Oxiranringes erhaltenen Rest einer Epoxidverbindung mit 2 bis 24 Kohlenstoffatomen, eines Glycidäthers mit gesättigten oder ungesättigten Alkylgruppen mit 1 bis 18 Kohlenstoffatomen im Alkylrest, eines Monoglycidylesters von gesättigten oder äthylenisch ungesättigten, gegebenenfalls verzweiten Carbonsäuren mit 1 bis 24 Kohlenstoffatomen im Acylrest oder einer mehrwertigen Epoxidverbindung, $R^6$ und $R^7$ für Wasserstoff stehen oder miteinander einen 5-oder 6-gliedrigen cycloaliphatischen Ring bilden und $R^8$ für Wasserstoff, einen aliphatischen verzweigten oder unverzweigten Kohlenwasserstoffrest mit 1 bis 24 Kohlenstoffatomen, der gegebenenfalls mit Hydroxylgruppen substituiert sein kann, den an die 1,2-Epoxidgruppe gebundenen Rest eines Glycidyläthers mit gesättigten oder äthylenisch ungesättigten Alkylgruppen mit 1 bis 18 Kohlenstoffatomen in der Alkylkette, den an die 1,2-Epoxidgruppe gebundenen Rest eines Monoglycidylesters von gesättigten oder äthylenisch ungesättigten gegebenenfalls verzweigten Carbonsäuren mit 1 bis 24 Kohlenstoffatomen im Acylrest, sowie den an die 1,2-Epoxidgruppe gebundenen Rest einer mehrwertigen Epoxidverbindung stehen kann.

Andere zur Umsetzung mit den Epoxidverbindungen zur Reaktion zu bringende Verbindungen sind Diaminoverbindungen, die zu den Produkten der Formel (V) und (VI) führen. Geeignete Diamine der allgemeinen Formel $H_2N—R^3—NH_2$, worin $R^3$ die oben angegebene Bedeutung hat, sind z.B. Äthylendiamin, Propylendiamin, 1,3-Diaminopropan, 3-Amino-1-cyclohexylamino-propan, 1,5-Diaminopentan, Hexamethylendiamin, 1,2-(3-Aminopropoxy)-3-methylpentan-3, (2-Aminoäthyl)-aminopropyl-amin; Polyalkylenpolyamine wie z.B. Diäthylentriamin, Dipropylentriamin; Bis-(3-amino-propyl)-methylamin, Bis-(6-aminohexyl)-amin; Bis-(4-aminocyclohexyl)-methan; Bis-(3-methyl-4-aminocyclohexyl)-methan; 2,2-Bis-(4-aminocyclohexyl)-propan; (3-Methyl-4-aminocyclohexyl) (3-methyl-4-aminophenyl)-methan; 4,4-Diaminodophenylmethan; Bis-(4-methylaminophenyl)-methan und Bis-(3-methyl-4-amino-phenyl-)methan.

Beim Einsatz dieser Verbindungen ist zu beachten, daß sie ebenfalls im Überschuß gegenüber den Epoxidverbindungen eingesetzt werden. Im allgemeinen werden zur Umsetzung die oben genannten Bedingungen gewählt, wobei die Reaktionen üblicherweise bei Normaldrucken durchgeführt und die Entfernung des überschüssigen Amins bzw. der Lösungsmittel ebenso wie bei den Epoxid/Ammoniak-Addukten destillativ, gegebenenfalls unter vermindertem Druck bei 100 bis 250°C, in besonders schwierigen Fällen auch im Dünnschichtverdampfer vorgenommen werden kann. Auch hier gelten die bie den Epoxid/Ammoniak-Addukten bereits genannten Bereiche bezüglich der Molekulargewichte und Aminzahlen.

Die erfindungsgemäß zu verwendenden Additionsprodukte (A) lassen sich gegebenenfalls durch teilweise Reaktion der primären und/oder sekundären Aminogruppen mit Carbonsäuren oder Carbonsäureestern gesättigter oder äthylenisch ungesättigter Carbonsäuren mit 6 bis 24 Kohlenstoffatomen im Acylrest in die entsprechenden Amidgruppen enthaltenden Produkte überführen. Dimere Fettsäuren können dann eingesetzt werden, wenn diese modifizierende Reaktion unter quasi Molekulargewichtsverdoppelung durchgeführt werden soll.

Es ist zu beachten, daß die Epoxid/Amin-Addukte vorstehend genannter Diamine neben den sekundären Amino-β-hydroxyalkylgruppen primäre Aminogruppen enthalten, gegebenenfalls, wie z.B. im Falle des Einsatzes von Dialkylentriamin, auch sekundäre Aminogruppen enthalten können. Die primären Aminogruppen, (die keine β-Hydroxyalkylgruppen enthalten) lassen sich erfindungsgemäß mit Carbonylverbindungen (I) nur dann schützen, wenn sie mit Ketonen in ihre entsprechenden Ketimine überführt werden. Ist das nicht der Fall, so werden sie bei der Umsetzung mit den geblockten Isocyanaten mit diesen zur Reaktion gebracht und Harnstoffgruppen gebildet. Ähnliches gilt für die primären Amino-β-hydroxyalkylgruppen der Epoxid-Ammoniak-Addukte. Mit Aldehyden, wie z.B Isobutyraldehyd lassen sich die entsprechenden Oxazolidine besonders vorteilhaft herstellen. (Formel VII). Da die entstehenden NH-Oxazolidine mit geblockten Isocyanaten reagieren, stellt die Struktur in dieser Form also keine Schutzgruppe gegen Isocyanatgruppen dar; durch eine zusätzliche Reaktion z.B. mit Epoxidverbindungen, wie z.B. den bereits genannten Monoepoxidverbindungen, die bereits oben in anderem Zusammenhang genannt sind, ist dafür zu sorgen, daß die basische Gruppierung erhalten bleibt, wobei sie nach Hydrolyse als sekundäre Amino-β-hydroxyalkylgruppe vorliegt.

Die Umsetzung der NH-Funktion mit der Epoxidverbindung erfolgt entsprechend der Beschreibung der US—PS 3 707 541 und eigenen Beobachtungen zufolge mit hoher Wahrscheinlichkeit aus dem tautomeren Gleichgewicht heraus.

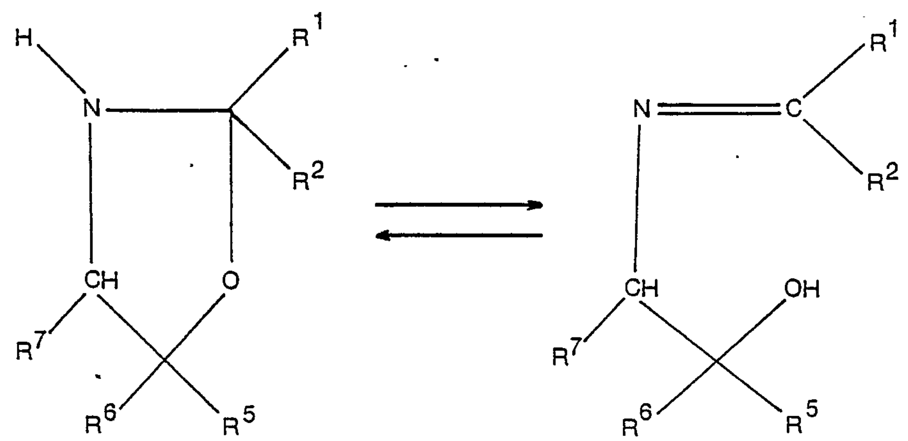

(VII)

Entsprechend der abgeschwächten Basizität der NH-Oxazolidine wird die Umsetzung bei etwas höheren Reaktionstemperaturen als bei Epoxid-Amin-Reaktionen üblich, eventuell auch unter geringem Druck durchgeführt. Bevorzugt geeignet ist z.B. der Temperatur-Bereich zwischen 100 und 150°C.

Die Umsetzung der Komponente (a) mit Carbonylverbindungen zu den entsprechenden Oxazolidinen wird nach literaturbekannten Methoden (E.D. Bergmann Chem. Rev., 53, 309 (1953) durchgeführt, wobei ein Keton und/oder Aldehyd unter cyclisierender Dehydratisierung mit der polymeren primäre und/oder sekundäre Amino-β-hydroxyalkylgruppen, eventuell auch Ketimingruppen enthaltenden Komponente (A) kondensiert wird und das Reaktionswasser üblicherweise durch ein inertes Schleppmittel bzw. auch durch die im Überschuß eingesetzte Carbonylverbindung azeotrop entfernt wird.

Als Carbonylverbindungen der allgemeinen Formel (IV)

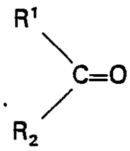

(IV)

eignen sich insbesonders folgende Aldehyde und Ketone: Formaldehyd, Acetaldehyd, Propionaldehyd, Butyraldehyd, Isobutyraldehyd, Benzaldehyd, Tetrahydrobenzaldehyd, Aceton, Methylpropylketon, Methylisopropylketon, Diäthylketon, Methylbutylketon Methylisobutylketon, Methyl-t-butylketon, Diisobutylketon, Cyclopentanon und Cyclohexanon.

Bevorzugt einzusetzende Carbonylverbindungen sind entsprechend der oben genannten Definition der Reste $R^1$ und $R^2$ Formaldehyd sowie die genannten aliphatischen Aldehyde bzw. Ketone, insbesonders Aldehyde wie Isobutyraldehyd. Sind ausschließlich oder überwiegend primäre und/oder sekundäre Amino-$\beta$-hydroxygruppen der Komponente (A) umzusetzen, so ist die Reaktion mit Aldehyden bevorzugt. Sind neben sekundären Amino-$\beta$-hydroxygruppen die schon erläuterten primären Aminogruppen der Epoxid/Diamin-Addukte in nennenswertem Umfang vorhanden, bewährt sich die kombinierte Reaktion von a) einem Keton und anschließend b) einem Aldehyd. Die Reaktion a) mit einem Keton unter Bildung des Ketimins verläuft im allgemeinen recht spezifisch, die weitere Umsetzung der sekundären $\beta$-Hydroxyalkylgruppen in die entsprechenden Oxazolidine wird aber besser durch Umsetzung mit Aldehyd z.B. Isobutyraldehyd durchgeführt. Das gilt zum Beispiel auch bei Epoxid-Ammoniak-Addukten, wenn sie überwiegend sekundäre Amino-$\beta$-hydroxyalkylgruppen aufweisen.

Zur Weiterbehandlung der gegebenenfalls abgewandelten Additionsprodukte werden diese mit teil- oder vollblokkierten Di- oder Polyisocyanaten (B) umgesetzt. Diese Reaktion wird zweckmäßigerweise bei 40—150°C durchgeführt, wobei der Bereich von 110—150°C bevorzugt für die Umsetzung der vollgeblockten Di- oder Polyisocyanate mit den primären bzw. sekundären Aminogruppen gewählt wird. Die Umsetzung mit teilgeblockten Di- oder Polyisocyanaten mit den gegebenenfalls Ketimingruppen enthaltenden, auch modifizierten Additionsprodukten wird bevorzugt bei 10—100°C durchgeführt. Um die Urethangruppenbildung zu beschleunigen, können die üblichen die Urethanbildung beschleunigenden Katalysatoren, wie z.B. Dibutylzinndilaurat anwesend sein.

Die teil- oder vollgeblockten Di- oder Polyisocyanate werden aus aliphatischen, cycloaliphatischen und/oder aromatischen Di- und Polyisocyanaten, bevorzugt aus Toluylen-oder Isophorondiisocyanat hergestellt bzw. aus Derivaten, deren Teil- bzw. Halbblockierung besonders selektiv verläuft; aber auch andere aromatische oder aliphatische Isocyanate sind geeignet. Als Polyisocyanate sind besonders zu nennen die Umsetzungsprodukte von Diisocyanaten wie Toluylendiisocyanat mit mehrwertigen Alkoholen, wie z.B. Glykolen (auch oligomere Glykolätheralkohole), Glycerin, Trimethylolpropan sowie (Di)-Pentaerythrit und Sorbit bzw. deren Additionsprodukten mit Monoepoxiden, wie Äthylenoxid und/oder Propylenoxid, Butylenoxid, Glycid usw.

Als Blockierungsmittel kommen die üblichen primären, sekundären und tertiären Alkohole in Betracht, wie n-, iso- und tert.-Butanol, 2-Äthylhexanol, Äthylenglykolmonoalkyläther, Monoalkyläther von Di- oder Poly-Glykolen (auch oligomere Glykolätheralkohole), Glycerin, Trimethylolpropan sowie (Di)-Pentaerythrit und Sorbit bzw. deren Additionsprodukten mit Monoepoxiden, wie Athylenoxid und/oder Propylenoxid, Butylenoxid, Glycid usw.

Als Blockierungsmittel kommen die Üblichen primären, sekundären und tertiären Alkohole in Betracht, wie n-, iso- und tert.-Butanol, 2-Äthylhexanol, Äthylenglykolmonoalkyläther, Monoalkyläther von Di- oder Poly-Glykolen, Cyclohexanol. Aber auch Ketoxime, Lactame, Imide, Imidazol und Phenole sind als Blockierungsmittel geeignet.

Bei Verwendung von Phenolen als Verkappungsmittel in den vollgeblockten Di- oder Polyisocyanaten werden diese bei der Reaktion mit Ammoniak/Epoxid-Additionsprodukten abgespalten und können im Anschluß daran entweder mit Monoepoxiden oder mit Formaldehyd oder Formaldehyd abspaltenden Verbindungen umgesetzt werden.

Das setzt allerdings voraus, daß keine primären und/oder sekundären Aminogruppen vorhanden sind bzw. im Falle des Vorhandenseins von primären Aminogruppen, daß diese durch Ketimingruppen gegen die Reaktion mit den Epoxidverbindungen geschützt sind.

Bei der Umsetzung von (A) mit (B), wobei (B) ein vollgeblocktes, aus mehrwertigen Alkoholen und Diisocyanat hergestelltes Polyisocyanat ist, werden die Blockierungsmittel zwar im allgemeinen in der gewünschten Weise abgespalten, als Nebenreaktion kann aber auch die Spaltung der anderen Urethangruppe eintreten, so daß die Übertragung des geblockten Diisocyanates auf das Additionsprodukt (A) oder die Komponente (C) erfolgt.

Es kann daher vorteilhaft sein, Mischungen zweier verschiedener Blockierungsmittel zu verwenden. Besonders reaktionsfähig sind die Phenol-, Alkylphenol- oder Oxim-geblockten Isocyanate, die in Mischung mit einem der obengenannten Blockierungsmittel verwendet werden. Besonders geeignet ist z.B. tert. Butylphenol.

Die aus (A) und gegebenenfalls den abgewandelten Produkten von (A) mit (B) hergestellen Produkte können frei von basischen Aminogruppen sein oder aber primäre und/oder sekundäre und/oder tertiäre Aminogruppen enthalten.

Die erfindungsgemäßen Oxazolidingruppen tragenden Reaktionsprodukte aus (A) und (B) sind bereits als Elektrotauchlackbindemittel einsetzbar, wenn die Komponente (A) hinsichtlich ihres Gehaltes an basischen Stickstoff und des Molekulargewichtes optimal eingestellt ist und Maßnahmen zum Schutz möglichst aller Aminogruppen getroffen sind. Als Richtgrößen können Aminzahlen von 130 bis 400 und Molekulargewicht von 1500 bis 3000 gelten.

Sind keinerlei basischen Aminogruppen vorhanden, so ist die weitere Umsetzung mit Di- oder Polyaminen (C) zu den erfindungsgemäßen selbstvernetzenden kationischen Bindemitteln zwingend. Für die Produkte mit basischen Aminogruppen ist diese Folgereaktion durch angezeigt, wenn beispielsweise Bindemittel angestrebt werden, die hinsichtlich des pH-Wertes und/oder Leitwertes der aus ihnen hergestellten Lackbäder besonderen Anforderungen gerecht werden sollen, oder die aufgrund ihres Gehaltes oder der Basizität ihrer primären und/oder sekundären Aminogruppen die gewünschte Vernetzungsreaktion mit den geblockten Urethangruppen besonders günstig beeinflussen sollen.

Besonders bevorzugt verwendet werden können als Komponente (C) z.B. Polyaminoamide bzw. Polyaminoimidazoline, wenn als Komponente (A) Additionsprodukte aus Ammoniak und Epoxidverbindungen auf Basis von Di- oder Polyphenolen ohne anschließende modifizierende Maßnahme eingesetzt wurden.

Geeignete Polyamine (C) sind im allgemeinen Amine mit 2—20, vorzugsweise 3—10 primären und/oder sekundären Aminogruppen im Molekül. Die Aminogruppen können dabei Teil eines aliphatischen und/oder cycloaliphatischen Moleküles sein. Neben diesen charakteristischen Gruppierungen können die Polyamine noch andere für bestimmte Produkteigenschaften wichtige Gruppierungen tragen wie z.B.

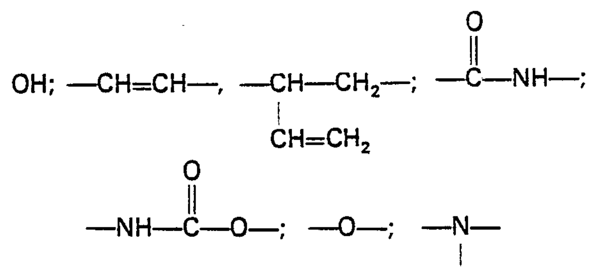

über Amidgruppen bzw. Imidazolinreste gebundene ungesättigte Fettsäurereste oder dimere Fettsäurereste. Geeignet sind auch Umsetzungsprodukte aus Glycidyläthern schon genannter Alkylphenole mit Polyalkylenpolyaminen.

Im einzelnen seien als Polyamin (C) folgende Polyalkylen-di-und Polyamine genannt: Diäthylentriamin, Dipropylentriamin, N,N'-Bis-(3-amino-propyl)-äthylendiamin, Bis-(6-aminohexyl)-amin, Tripropylentetramin, Tetrapropylenpentamin, Pentaäthylenhexamin, Hexamethylenheptamin, 4,4'-Diaminodicyclohexylamin usw.

Andere geeignete Polyamine sind hydrierte Butadien/Acryl-nitril-Copolymerisate. Außerdem Polyäthylenimine und Polypropylenimine sowie Polyaminoamide und Polyaminoimidazoline gesättigter oder äthylenisch ungesättigter (dimerer) Fettsäuren und Di- oder Tricarbonsäuren.

Noch zu erwähnen wären die Dialkylaminoalkylamine, wie z.B. Dimethylaminopropylamin, die vorzugsweise bei den schon erwähnten Ketimingruppen tragenden Bindemitteln aus (A) und (B) verwendet werden können. Wegen der bereits erwähnten Übertragungsmöglichkeit der geblockten Isocyanate auf Aminoverbindungen sind Polyamine mit mindestens 3 primären und/oder sekundären Aminogruppen, gegebenenfalls auch in Form ihrer Ketimine, wünschenswert um durch die Reaktion der Komponente B mit dem Polyamin (C) zu den erfindungsgemäßen selbstvernetzenden Bindemitteln zu gelangen.

Die Herstellung der selbstvernetzenden Bindemittel durch die Reaktion der Komponenten (A), (B) und (C) erfolgt im allgemeinen bei Temperaturen von 50 bis 150°C, bevorzugt bei 100 bis 130°C. Bei der unter Harnstoffbrückenbildung verlaufenden Umsetzung der Aminogruppen mit den geblockten Isocyanatgruppen wird das Blockierungsmittel abgespalten und verbleibt als Lösungsmittel in der Reaktionsmischung oder wird entfernt, wenn es seine Flüchtigkeit zuläßt bzw. wenn unter vermindertem Druck gearbeitet wird, was durchaus möglich ist und zu lösungsmittelfreien Umsetzungsprodukten führt. Die Vernetzungsreaktion verläuft mit genügender Geschwindigkeit im Temperaturbereich 160—200°C, bevorzugt 170—180°C. Die Trennung der Reaktion bei der Herstellung der Bindemittel aus den Komponente (A), (B) und (C) von der der Vernetzung läßt sich darüber hinaus durch andere technische und chemische Maßnahmen unterstützen, z.B. a) durch Herabsetzen der Reaktionstemperatur nach Erreichen des gewünschten Umsetzungsgrades, der sich meistens durch das Erreichen einer bestimmten Viskosität charakterisieren läßt, b) durch Protonieren und Verdünnen mit Säuren und Lösungsmitteln bzw. Wasser. Dabei können die unter a) und b) genannten Mänahmen miteinander kombiniert werden.

Die erfindungsgemäßen selbstvernetzenden Bindemittel Können mit üblichen Lacklösungsmitteln, wie Alkoholen von einer Kettenlänge $C_3$—$C_{16}$ z.B. Isopropanol, Dekanol, n-, und iso-Butanol, Alkylaromaten z.B. Toluol und Cycloaliphaten sowie mit (oligomeren) Glykolen und Glykoläthern oder

wäßrigen organischen Lösungsmittelgemischen verdünnt, gegebenenfalls zusammen Pigmenten, Füllstoffen und üblichen Hilfsmitteln unter Anwendung konventioneller Lackiermethoden, wie Spritzen, Tauchen, Fluten, auf das zu überziehende bzw. zu lackierende Substrat, wie z.B. auf Holz, Metall, Glas oder Keramik, aufgetragen, getrocknet und bei Temperaturen von über 170°C gehärtet werden. Die damit erhaltenen Überzüge zeichnen sich beispielsweise durch hohe Härte und Lösungsmittelbeständigkeit aus.

Bevorzugt werden die erfindungsgemäßen Lackbindemittel jedoch mit Säuren, wie z.B. Phosphorsäure und ihren Derivaten, vorzugsweise mit wasserlöslichen Carbonsäuren, wie z.B. Essigsäure, Ameisensäure, Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden.

Durch die Protonierung werden die Oxazolidingruppen hydrolysiert, d.h. die Carbonylverbindungen wieder abgespalten. Im Anschluß daran besteht die Möglichkeit die Lösungsmittel und die Carbonylverbindungen insbesonders die als Carbonylverbindungen eingesetzten Aldehyde wie Isobutyraldehyd aus dem Reaktionsansatz zu entfernen, bevorzugt unter Anlegen eines schwachen Volumens.

Besonders bevorzugt ist ein Verfahren zur Herstellung von Sekundärdispersionen aus dem erfindungsgemäßen Bindemittel, welches davon ausgeht, daß das Reaktionsprodukt aus der Komponente (A) und (B) bzw. gegebenenfalls der Komponente (C) mit einer Carbonsäure protoniert und nach Zugabe von Wasser, das oder die organischen Lösungsmittel beziehungsweise die Hydrolyseprodukte der Oxazolidingruppen insbesonders Aldehyde wie Isobutyraldehyd usw. welche zu Geruchsbelästigungen durch die Lackbäder führen können, unter gleichzeitiger Zufuhr weiteren Wassers als azeotropes Gemisch mit Wasser destillativ entfernt werden.

Den erfindungsgemäßen Bindemitteln können bei der Überführung in die Sekundärdispersionen oder im Anschluß daran die üblichen Lacklösungsmittel, wie Alkohole von einer Kettenlänge $C_3$—$C_{16}$ z.B. Isopropanol, Dekanol, n-, und iso-Butanol, Alkylaromaten z.B. Toluol und Cycloaliphaten sowie (oligomere) Glykole und Glykoläther zugesetzt werden.

Die bevorzugte Verwendung der protonierten erfindungsgemäßen Lackbindemittel ist die kathodische Elektrotauchlackierung elektrisch leitender Flächen, z.B. von Metallteilen, Blechen usw. aus Messing, Kupfer, Aluminium, Eisen und Stahl, die gegebenenfalls chemisch vorbehandelt, z.B. phosphatiert, sind.

Zur Herstellung der kathodisch abscheidbaren wäßrigen Dispersionen können im Gemisch mit den Produkten aus den Komponenten (A), (B) und (C) die Produkte aus den Komponenten (A) und (B) verwendet werden. Die Höhe des Zusatzes hängt von Grad der Protonierbarkeit des Gemisches ab.

Die wäßrigen Lösungen oder Dispersionen der zumindest teilweise als Salz einer wasserlöslichen Carbonsäure vorliegenden Lackbindemittel können auch im Gemisch mit diesen durch Kataphorese elektrochemisch abschiedbare Hilfsstoffe enthalten, wie Pigmente, lösliche Farbstoffe, Lösungsmittel, Verlaufsverbesserer, Stabilisatoren, Anti-schaummittel sowie andere Hilfs-, und Zusatzstoffe, wie Härtungskatalysatoren, beispielsweise Acetate; Naphthenate oder Oleate des Zinns, Bleis, Zinks, Zirkons, Kobalts, Nickels oder Kupfers, die zum bekannten Stand der Technik gehören und z.B. in der DE—OS 25 41 234 und 24 57 437 genannt sind.

Die erfindungsgemäßen Lackbindemittel können sowohl als Hauptträgerharz für die elektrische Abscheidung als auch als Anreibeharz in der Pigmentpaste benutzt werden. Besonders geeignet sind dann die Cardanol- und Fettsäure-modifizierten sowie die Sorbit/Propylenoxid-modifizierten Bindemittel des Herstellungsverfahrens. Alternativ kann das Harz als Hauptträgerharz für die elektrische abzuscheidende Masse in Kombination mit einer üblichen Pigmentpaste (z.B. nach DE—OS 2 606 831) verwendet werden.

Zur kathodischen Elektrotauchlackierung wird im allgemeinen durch Verdünnen mit entionisiertem Wasser ein Feststoffgehalt des Elektrotauchbades von 5 bis 30 Gewichtsprozent eingestellt. Die Abscheidung erfolgt im allgemeinen bei Temperaturen von 15 bis 40°C während einer Zeit von 1 bis 2 Minuten und bei Bad-pH-Werten von 5,0 bis 8,5, vorzugsweise pH 6,0 bis 7,5, bei Abscheidungsspannungen zwischen 50 und 500 Volt.

Nach dem Abspülen von noch anhaftendem Badmaterial wird der aus dem elektrisch leitenden Köper kathodisch abgeschiedene Film bei etwa 160 bis 220°C 10 bis 30 Minuten, vorzugsweise bei 170 bis 180°C 20 Minuten gehärtet.

Die erfindungsgemäßen Überzugsmittel ergeben bei der kathodischen Abscheidung Überzüge mit hervorragenden mechanischen Eigenschaften, wie große Härte und Kratzfestigkeit, bei sehr guter Elastizität und fester Haftung auf dem Substrat.

Weiterhin zeichnen sich die damit erhaltenen Überzüge durch hohe Lösungsmittelbeständigkeit und Korrosionsbeständigkeit, z.B. im Salzsprühtest, aus.

Die in den Beispielen genannten Teile und Prozente sind, soweit nicht anders angegeben, Gewichtsteile bzw. Gewichtsprozente.

Herstellung der Epoxid/Ammoniak-Addukte:

I. Verhältnis 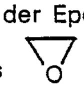 : $NH_3 = 1:4$

In einem drucksicheren Reaktor werden 480,0 Teile Methanol und 109 Teile Ammoniak vorgelegt. Über eine Dosierpumpe werden in 60 Minuten 1333,0 Teile einer 60% igen toluolischen Lösung eines Diglycidyläthers aus Bisphenol A und Epichlorhydrin mit einem Epoxidwert von 0,2 zugepumpt.

Die Nachreaktion dauert 4 Stunden bei 70°C.

Der Höchstdruck während der Reaktion beträgt 4 bar. Nach Entfernung der Lösungsmittel und de überschüssigen $NH_3$, zuletzt im Vakum bei 150°C und 30 Torr, erhält man ein klares, helles Harz mit folgenden Daten:

Mittleres Molekulargewicht 1650; Erweichungspunkt: 91°C. Der Gesamtstickstoff beträgt 1,9%. Davon entfallen 1,1% auf primäre-, 0,7% auf sekundäre-, und 0,1% auf tertiäre Aminogruppen.

II. Verhältnis 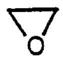 : $NH_3 = 1:5$

Wie unter I beschrieben, werden im Reaktor zu 468,0 Teilen Methanol und 133,0 Teilen Ammoniak bei 60°C 1300 Teile einer 60%igen toluolischen Lösung eines Diglycidyläthers auf der Basis von Bisphenol A und Epichlorhydrin mit einem Epoxidwert von 0,2 zugepumpt.

Die Daten des klaren, hellen Festharzes sind wie folgt:

Mittleres Molekulargewicht: ca. 1600, Erweichungspunkt: 91°C. Der Gesamtstickstoff beträgt 2,1%. Davon entfallen 1,6% auf primäre-, 0,4% auf sekundäre und 0,1% auf tertiäre Aminogruppen.

IIIa) Verhältnis 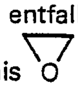 : $NH_3 = 1:4$

In einem drucksicheren Reaktor werden 813,0 Teile Methanol und 184,0 Teile Ammoniak vorgelegt. Über eine Dosierpumpe werden in 45 Minuten bei 60°C 902 Teile einer toluolischen Lösung eines Diglycidyläthers aus Bisphenol A und Epichlorhydrin mit einem Epoxidwert von 0,5 zugepumpt. Zur Nachreaktion wird weitere 4 Stunden bei 70°C erhitzt. Der maximale Druck während der Reaktion beträgt 8 bar. Anschliessend wird das Lösungsmittel nebst $NH_3$ durch Destillation entfernt; zuletzt bei 150°C und 30 Torr. Die Untersuchung des klaren, hellen Harzes ergab ein mittleres Molekulargewicht von 2300 und einen Erweichungspunkt von 86°C.

Der Gesamtstickstoff beträgt 4,8%. Davon entfallen 2,9% auf primäre-, 1,7% auf sekundäre- und 0,2% auf tertiäre Aminogruppen.

IIIb) Verhältnis 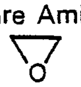 : $NH_3 = 1:3$

Wird die Reaktion wie unter a) beschrieben mit 138,0 Teilen Ammoniak durchgeführt, wird ein Produkt mit folgenden Daten erhalten:

Mittleres Molekulargewicht 2450, Erweichungspunkt: 89°C (gemessen auf der Koflerbank). Der Gesamtstickstoff beträgt 4,8%. Davon entfallen 2,6% auf primäre-, 1,9% auf sekundäre- und 0,3% auf tertiäre Aminogruppen.

IIIc) Verhältnis 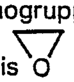 : $NH_3 = 1:2$

Wird die Reaktion wie unter a) beschrieben mit 92,0 Teilen Ammoniak durchgeführt, wird ein Produkt mit folgenden Daten erhalten:

Mittleres Molekulargewicht 2900; Erweichungspunkt: 100°C. Der Gesamtstickstoff beträgt 4,2%. Davon entfallen 1,6% auf primäre-, 2,1% auf sekundäre- und 0,5% auf tertiäre Aminogruppen.

*Abwandlung eines Epoxid/Ammoniak-Adduktes*

300,0 Teile des nach IIIc) erhaltenen Epoxid/Ammoniak-Adduktes werden mit 40,0 Teilen Butylglykol auf 155—160°C aufgeheizt. Unter $N_2$ werden in 1,5 Stunden 63,0 Teile Leinöl zugetropft. Nach etwa 3 Stunden Reaktion bei 160°C wird die anfangs trübe Mischung klar. Die Reaktion ist beendet, wenn Viskositätskonstanz erreicht wird, was nach etwa weiteren 3 Stunden der Fall ist. Die Aminzahl beträgt 73,5 mg KOH/g des Ansatzes. In einer Apparatur mit gut wirkendem Rührer wird der Ansatz mit Isopropanol auf 70% Festgehalt verdünnt. Bei 70°C werden innerhalb von 45 Minuten 35,0 Teile Propylenoxid zugetropft. Die Reaktion ist beendet, wenn der schwache Rückfluß zum Stillstand gekommen ist.

*Herstellung vollgeblockter Polyisocyanate*

(B1) 550,0 Teile eines durch kationische Katalyse erhaltenen Adduktes aus Sorbit und Propylenoxid mit einer OH-Zahl von 263,4 (MG: 1270) in 340,0 Teilen Toluol und 0,4 Teilen Dibutylzinndilaurat werden auf 90°C erhitzt. Bei dieser Temperatur werden 289,0 Teile eines Äthylglykol-halbblockierten Toluylendiisocyanates (80/20) und 520,0 Teile eines 2-Äthylhexanol-halbblockierten Toluylendiisocyanates im Gemisch innerhalb von 1,5 Stunden zugetropft und bei 100°C bis zum Erreichen eines NCO-Gehaltes von 0,02% weiter umgesetzt. Der Festgehalt beträgt 80,2%.

(B2) 975 Teile eines wie oben beschreiben durch kationische Katalyse erhaltenen Adduktes aus Sorbit und Propylenoxid mit einer OH-Zahl von 333 (MG: 1011) in 640,0 Teilen Toluol und 0,8 Teilen Dibutylzinn-dilaurat werden auf 90°C erhitzt. Bei dieser Temperatur werden 577 Teile eines Äthylglykol-halbblockierten Toluylendiisocyanates (Isomerengemisch 80/20) im Gemisch mit 1160 Teilen eines 2-Äthylhexanol-halbblockierten Toluylendiisocyanates (80/20) innerhalb von 1,5 Stunden zugetropft. Anschließend wird auf 100°C weitererhitzt und bis zu einem NCO-Gehalt von 0,04% umgesetzt. Der Festgehalt beträgt 81,9%.

Beispiel 1

450,0 Teile des vollgeblockten Polyisocyanates (B2) werden mit 240,0 Teilen des Epoxid/Ammoniak-Adduktes (II) mit einer Aminzahl von 79 und einem Molekulargewicht von ca. 1600 unter Stickstoff auf 140°C aufgeheizt und bei dieser Temperatur gehalten, bis die Aminzahl den Wert nahe 0 erreicht hat. Danach werden 47,5 Teile Tetrapropylenpentamin und 10 Teile Isodekanol zugesetzt. Während der nun einsetzenden Umsetzung wird die Temperatur langsam auf 120°C abgesenkt. Sobald der Ansatz eine Aminzahl von 44,5 mg KOH/g erreicht hat, wird mit 15,0 Teilen Essigsäure in 60,0 Teilen Wasser protoniert und anschließend mit 22,0 Teilen Isodekanol und 1100 Teilen vollentsalztem Wasser auf einen Festgehalt von 33% verdünnt.

Beispiel 2 (Verwendungsbeispiel)

269,0 Teile der Bindemittel nach Beispiel 1 werden mit 96,0 Teilen einer Pigmentzubereitung, bestehend aus 120,0 Teilen der nach Beispiel 1 erhaltenen Bindemitteldispersion aus 220,0 Teilen $H_2O$: 68,0 Teilen Talkum, 36 Teilen Titandioxid und 16,4 Teilen Ruß mit einer Teilchengröße von 3 $\mu$m sowie mit 1,0 Teil Dibutylzinndilaurat und 5 ml Isodekanol gemischt und auf 1 l verdünnt, entsprechend einem Festgehalt des Bades von 12%.

Der pH-Wert beträgt 7,3; der Leitwert $0,76.10^{-3}$ $S.cm^1$.

Bei 25°C und 200 Volt/2 Minuten wurden Abscheidungen auf zinkphosphatierten Stahlblechen ausgeführt. Nach dem Einbrennen (20 Minuten/190°C werden glatte Beschichtungen erhalten, die eine Schichtdicke von 15—16 $\mu$m aufweisen. Nach 10 Tagen Belastung durch den Salzsprühtest nach DIN 50 021 werden auf den zinkphosphatierten Stahlblechen, die mit Chromsäure nachbehandelt waren (Bonder® 101), eine Unterwanderung von 1—2 mm (gemessen vom Schnitt) und bei den ausschließlich mit Wasser nachbehandelten Blechen (Bonder 101 WL) eine Unterwanderung von 3—5 bis 4,5 mm (gemessen vom Schnitt) festgestellt.

Beispiel 3

220,0 Teile des vollgeblockten Polyisocyanatgruppen enthaltenden Sorbit/PO-Adduktes (B1) werden mit 180,0 Teilen des Epoxid/Ammoniak-Adduktes (I) mit einer Aminzahl 68 mg KOH/g Festharz unter Stickstoff auf 130°C erhitzt und bis zum Erreichen der Aminzahl 2 mg KOH/g Harzlösung bei dieser Temperatur gehalten. Anschließend werden 29,0 Teile Tetrapropylenpentamin und 20,0 Teile Toluol zugesetzt und bei 115—117°C bis zum Erreichen der Aminzahl von 40 mg KOH/g Harzlösung weiter erhitzt. Danach wird das Harz mit 9,8 Teilen Essigsäure in 50 Teilen vollentsalztem Wasser protoniert und mit weiteren 990,0 Teilen vollentsalztem Wasser langsam verdünnt. Der Festegehalt der kolloidalen Dispersion beträgt 23,6%.

Elektrotauchlackierung: 800,0 Teile der obengenanten Dispersion und 1,0 Teil Dibutylzinndilaurat werden mit 192,0 Teilen vollentsalztem Wasser auf 1 l verdünnt und über Nacht bei 30°C gealtert. Der pH-Wert beträgt 7,3, der Leitwert $1,68.10^{-3}$ $S.cm^{-1}$. Zur Prüfung des Umgriffes werden Zellen benützt, deren Innenmaße 25 cm.5 cm betragen. Der Abstand des Prüfbleches von der Gegenwand beträgt 1, 2 und 3 mm.

Bei einer Eintauchtiefe von 24 cm werden für den Abstand 3 mm eine Eindringtiefe der Beschichtung bei 200 V/2 Minuten bei 30°C von 24 cm gefunden; Q = Quotient = 1,0. Für den Abstand 2 mm wird eine Eindringtiefe von 19,6 cm (Q = 0,9) gefunden.

Für den Abstand 1 mm wird eine Eindringtiefe von 14,2 cm (Q = 0,66) gefunden.

Beispiel 4

a) Umsetzung Epoxidharz mit Ammoniak

Zur Herstellung eines Epoxid/$NH_3$-Adduktes in einem drucksicheren Rührgefäß werden 450 Teile Methanol vorgelegt, 298 Teile Ammoniak ($NH_3$) aufgepreßt und als Mischung 1120 Teile einer 60%igen toluolischen Lösung eines Diglycidylethers aus Bisphenol A und Epichlorhydrin mit einem Epoxidwert von 0,2 und 168 Teile 4-Vinylcyclohexendioxid (ERL 4206 der Fa. UCC) bei 60°C in 2 Stunden zudosiert.

Man läßt weitere 4 Stunden bei 70°C nachreagieren. Anschließend wird das Lösungsmittel restlos im Vakuum abdestilliert (Endtemperatur beim Destillieren ca. 150°C). Die Analyse ergab einen Gesamt-N-Gehalt von 4,6% wovon auf primäre N-Gruppen 2,3% sekundäre N-Gruppen 1,9% und tertiäre N-Gruppen 0,4% entfallen. Molekulargewicht: 1950.

b) Herstellung des polymeren Oxazolidins

400 Teile des unter a) hergestellten Epoxid/$NH_3$-Adduktes, 400 Teile Methylisobutylketon und 50 Teile Toluol werden auf 120°C (Rückfluß) aufgeheizt. Bei Rückfluß rührt der Versuch 6 Stunden. Während dieser Zeit wird Wasser ausgekreist. Dann erfolgt der Zulauf von 120 Teilen Isobutyraldehyd in 2 Stunden bei Rückfluß. Nach zulaufende wird weiter 9 Stunden Wasser ausgekreist. Gesamt $H_2O$-Menge: 46,5 Teile; Feststoffgehalt: 75,4%.

c) Herstellung des halbblockierten Toluylendiisocyanates

Zu 696 Teilen Toluylendiisocyanat 80/20 werden 360 Teile Ethylglykol bei 15° bis 20°C in 1 Stunde zugetropft. Anshließend läßt man noch 4 Stunden bei 15° bis 20°C nachreagieren.

d) Herstellung einer kathodischen Elektrotauchlackdispersion

Es werden 271,7 Teile des Oxazolidins (B) unter $N_2$-Spülung auf 60°C aufgeheizt und 90 Teile halbblockiertes TDI (c) bei 60°C in 40 Minuten zugetropft. Das Produkt läßt man bei 60°C nachreagieren bis ein Isocyanatgehalt von 0% erreicht ist. Die Reaktion wird dann mit 8 Teilen Eisessig, 20 Teilen (vollentsalztem = VE)-Wasser und 60 Teilen Isopropanol abgebrochen. Anschließend wird mit 390 Teilen Wasser dispergiert. Festoffgehalt: 28,2%.

e) Elektrotauchlackierung

Zur Herstellung eines 10%igen Lackbades werden 354,6 Teile der 28,2%igen Dispersion (d) mit VE-Wasser auf 1000 Teile verdünnt. Dann erfolgt die Zugabe von 500 ppm Blei (berechnet auf Badvolumen) als wäßrige Bleiacetallösung. Das Lackbad wird 24 Stunden bei 30°C gerüht; es hat einen pH-Wert von 5 und einen Leitwert von $1{,}0.10^{-3}$ $S.cm^{-1}$. Auf phosphatierten Stahlblechen erhält man nach der Abscheidung (2 Minuten, 200 V bei 30°C) und Härtung (20 Minuten bei 180°C oder 20 Minuten bei 170°C) einen glatten Überzug mit einer Schichtdicke von 16 $\mu$m.

Die Korrosionsprüfung nach DIN 50021 auf eisenphosphatierten Stahlblechen, die mit Chromsäure nachgespült waren (Bonder® 1041), ergab nach 10 Tagen bei den Lackfilmen, die 20 Minuten bei 180°C gehärtet waren, eine Unterwanderung von 1,5 bis 2 mm und bei den Filmen die 20 Minuten bei 170°C gehärtet waren eine Unterwanderung von 1,7 bis 3 mm (gemessen vom Schnitt).

Bei einem 10%igen Lackbad ohne Bleizusatz erhält man auf phosphatierten Stahlblechen nach der Abscheidung (2 Minuten, 200 V bei 30°C) und Härtung (20 Minuten bei 180°C) einen glatten Überzug mit einer Schichtdicke von 23 $\mu$m.

Die Korrosionsprüfung nach DIN 50021 auf eisenphosphatierten Stahlblechen, die mit Chromsäure nachgespült waren, ergab nach 10 Tagen eine Unterwanderung von 0,5 bis 1 mm (gemessen vom Schnitt).

Beispiel 5

a) Umsetzung Epoxidharz mit Ammoniak

Zur Herstellung eines Epoxid/$NH_3$-Adduktes in einem drucksicheren Rührgefäß werden 480 Teile Methanol vorgelegt, 83 Teile Ammoniak ($NH_3$) aufgepreßt und 1333 Teile einer 60%igen toluolischen Lösung eines Diglycidylethers aus Bisphenol A und Epichlorhydrin mit einem Epoxidwert von 0,2 bis 60°C in 1 Stunde zudosiert. Man läßt weitere 4 Stunden bei 70°C nachreagieren. Anschließend wird das Lösungsmittel restlos im Vakuum abdestilliert. (Endtemperatur beim Destillieren 150°C). Die Analyse ergab einen Gesamt-N-Gehalt von 2,0% wovon auf primäre N-Gruppen 0,9%, sekundäre N-Gruppen 1,0% und tertiäre N-Gruppen 0,1% entfallen. Molekulargewicht: 860.

b) Herstellung des polymern Oxazolidins

400 Teile des unter a) hergestellten Produktes und 400 Teile Methylisobutylketon werden auf ca. 120°C (Rückfluß) aufgeheizt. Dann rührt man 6 1/2 Stunden unter Rückfluß. Während dieser Zeit werden 15,4 Teile Wasser ausgekreist. Feststoffgehalt: 55%.

c) Herstellung des halbblockierten Toluylendiisocyanates

Zu 522 Teilen Toluylendiisocyanat 80/20 werden 390 Teile Äthylhexanol bei 15 bis 20°C in 1 Stunde zugetropft. Anschließend läßt man noch 4 Stunden bei 15 bis 20°C nachreagieren.

d) Herstellung eines Polyamins

750 Teile einer dimeren Leinoelfettsäure (z.B. Empol® 1015 der Fa. Unilever) und 750 Teile Dipropylentriamin werden auf 190° bis 200°C aufgeheizt. Bei 190° bis 200°C wird in 3 Stunden über eine Brücke das Wasser abdestilliert. Anschließend wird im Vakuum destilliert bis eine Innentemperatur von ca. 200°C erreicht ist. Dann läßt man unter Stickstoff abkühlen. Endviskosität: 2,12 Pa.s/75°C (gemessen mit dem Platte-Kegel-Viskosimeter).

e) Herstellung de kathodischen Elektrotauchlackbindemittels

Zu 320 Teilen des Oxazolidins (b) werden 94,4 Teile halbblockiertes Toluylendiisocyanat (TDI) (c) bei 60° bis 70°C in 40 Minuten zugetropft. Das Produkt läßt man bei 90°C nachreagieren bis ein

Isocyanatgehalt von 0% erreicht ist. Nach Zugabe von 67,5 Teilen des Polyamins (d) wird auf 100°C aufgeheizt und bei 100°C bis zur Viskositätskonstanz gerührt. Die Viskositätskonstanz von ca. 1,76 Pa.s/100°C (gemessen mit dem Platte-Kegel-Viskosimeter) ist nach 1 Stunde erreicht. Die Reaktion wird dann mit 25 Teilen VE-Wasser und 6 Teilen Eisessig abgebrochen. Der Feststoffgehalt des Bindemittels beträgt 71,5%.

f) Elektrotauchlackierung

Zur Herstellung eines 10%igen Lackbades werden 100 Teile des Festharzes (e) mit VE-Wasser auf 1000 Teile verdünnt. Das Lackbad wird 24 Stunden bei 30°C gerührt; es hat einen pH-Wert von 6,8, Leitwert: $0{,}35.10^{-3}$ $S.cm^{-1}$. Nach 24 Stunden Ausrühren erfolgt die Zugabe von 10 Teilen Isodekanol. Auf phosphatierten Stahlblechen erhält man nach der Abscheidung (2 Minuten, 250 V bei 30°C) und Härtung (20 Minuten bei 180°C) einen glatten Überzug mit einer Schichtdicke von 14 bis 16 $\mu$m.

Die Korrosionsprüfung nach DIN 50021 auf eisenphosphatierten Stahlblechen die mit Chromsäure nachgespült waren (Bonder® 1041) ergab nach 10 Tagen eine Unterwanderung von 1,5 bis 3,5 mm (gemessen vom Schnitt).

Beispiel 6

a) Umsetzung Epoxidharz mit Ammoniak

Zur Herstellung eines Epoxid/$NH_3$-Adduktes in einem drucksicheren Rührgefäß 2400 Teile Methanol vorgelegt, 750 Teile Ammoniak ($NH_3$) aufgepreßt und 2800 Teile einer 60%igen toluolischen Lösung eines Diglycidylethers aus Bisphenol A und Epichlorhydrin mit einem Epoxidwert von 0,2 bei 60°C in 3 Stunden zudosiert. Man läßt 1 Stunde bei 60°C nachreagieren. Anschließend wird das Lösungsmittel restlos im Vakuum abdestilliert. (Endtemperatur beim Destillieren 150°C). Die Analyse ergab einen Gesamt-N-Gehalt von 4,5% wovon auf primäre N-Gruppen 2,6%, sekundäre N-Gruppen 1,6% und tertiäre N-Gruppen 0,3% entfallen. Molekulargewicht: 1430; Aminzahl: 157.

$a_1$) Zur Herstellung eines Epoxid/$NH_3$-Adduktes mit Aminzahl 145 werden in einem drucksicheren Rührgefäß 2400 Teile Methanol vorgelegt, 685 Teile Ammoniak ($NH_3$) aufgepreßt und 2800 Teile einer 60%igen toluolischen Lösung eines Diglycidylethers aus Bisphenol A und Epichlorhydrin mit einem Epoxidwert von 0,2 bei 60°C in 3 Stunden zudosiert. Man läßt 1 Stunde bei 60°C nachreagieren. Anschließend wird das Lösungsmittel restlos im Vakuum abdestilliert. (Endtemperatur beim Destillieren 150°C).

Die Analyse ergab einen Gesamt-N-Gehalt von 4,2% wovon auf primäre N-Gruppen 2,1%, sekundäre N-Gruppen 1,7% und tertiäre N-Gruppen 0,4% entfallen. Molekulargewicht: 970.

b) Herstellung des polymeren Oxazolidins

Es werden 875 Teile des unter a) hergestellten Produktes und 875 Teile des unter $a_1$) hergestellten Produktes geschmolzen und mit 942 Teilen Toluol verdünnt. Bei Rückfluß (ca. 120°C) werden in 1 Stunde 350 Teile Isobutyraldehyd zugetropft. Nach Zulaufende wird bei Rückfluß 2 Stunden Wasser ausgekreist. (Gesamt $H_2O$-Menge: 89 Teile). Anschließend bei ca. 120°C in 20 Minuten 176 Teile Glycid zutropfen. Danach läßt man noch 8 Stunden bei Rückfluß nachrühren. Feststoffgehalt: 72,4%.

c) Herstellung des halbblockierten Toluylendiisocyanates

Zu 870 Teilen Toluylendiisocyanat 80/20 werden 700 Teile Ethylhexanol bei 20°C in 1 Stunde zugetropft. Anschließend läßt man noch 4 Stunden bei 20°C nachreagieren.

$c_1$) Zu 870 Teilen Toluylendiisocyanat 80/20 werden 408,5 Teile Methylglykol bei 20°C in 1 Stunde zugetropft. Anschließend läßt man noch 4 Stunden bei 20°C nachreagieren.

d) Herstellung eines Polyamins

580 Teile einer dimeren Leinoelfettsäure (z.B. Empol® 1015) und 490 Teile Tetrapropylenpentamin werden 190°C aufgeheizt. Bei 190°C wird in 2 Stunden über eine Brücke das Wasser abdestilliert. Dann läßt man unter Stickstoff abkühlen. Die Aminzahl beträgt 354.

e) Herstellung einer kathodischen Elektrotauchlackdispersion

Es werden 276 Teile des unter b) hergestellten Produktes, 0,4 Teile Dibutylzinndilaurat und 55 Teile Toluol auf 30°C bis 40°C aufgeheizt und eine Mischung aus 76 Teilen des halbblockierten TDI (c) und 33 Teilen des halbblockierten TDI ($c_1$) in 1 Stunde bei 30° bis 40°C zugetropft. Nach 1 1/2 Stunden Rühren bei 60°C erfolgt die Zugabe von 80 Teilen Polyamin (d). Nach der Zugabe rührt der Versuch bei 100° bis 110°C bis eine Aminzahl von 30 erreicht ist. Die Reaktion wird bei Aminzahl 30 mit 8,5 Teilen Eisessig und 60 Teilen VE-Wasser abgebrochen. Bei 60°C wird im Vakuum das Lösungsmittel abdestilliert. Gleichzeitig tropft man 500 Teile VE-Wasser zu. Der Feststoffgehalt beträgt 38,6%.

f) Elektrotauchlackierung

Zur Herstellung eines 10%igen Lackbades werden in 259 Teile der 38,6%igen Dispersion (e) 7,7 Teile Äthylhexanol, 7,7 Teile Isopropanol und 340 ppm Blei (berechnet auf Badvolumen) als wäßrige Bleiacetatlösung eingerührt. Dann wird mit VE-Wasser auf 1000 Teile verdünnt. Das Lackbad rührt 24 Stunden bei 30°C, es hat einen pH-Wert von 7,2, Leitwert: $1{,}85 \cdot 10^{-1}$ $S \cdot cm^{-1}$. Nach 24 Stunden Ausrühren erfolgt die Zugabe von 5 Teilen Isodekanol. Auf phosphatierten Stahlblechen erhält man nach der Abscheidung (2 Minuten, 190 V bei 30°C) und Härtung (20 Minuten bei 180°C) einen Überzug mit einer Schichtdicke von 16 $\mu$m.

Die Korrosionsprüfung nach DIN 50021 ergab nach 10 Tagen auf eisenphosphatierten Stahlblechen die mit Chromsäure nachgespült waren eine Unterwanderung bis 0,5 mm und auf eisenphosphatierten Stahlblechen die wassernachgespült und luftgetrocknet waren (Bonder® 1041 WL) eine Unterwanderung bis 0,9 mm (gemessen vom Schnitt). Zinkphosphatierte Stahlbleche die mit Chromsäure nachgespült waren (Bonder 101) hatten nach 10 Tagen 0,5 bis 1,5 mm Unterwanderung und zinkphosphatierte Stahlbleche wassernachgespült, luftgetrocknet (Bonder 101 WL) bis 0,7 mm Unterwanderung (gemessen vom Schnitt).

Zur Prüfung des Umgriffes werden Zellen benutzt, deren Innenmaße 25 cm.5 cm betragen. Der Abstand der Prüfbleche von der Gegenwand/bzw. Gegenelektrode beträgt 3 und 2 mm. Bei einer Eintauchtiefe von 21,7 cm werden für den Abstand 3 mm eine Eindringtiefe der Beschichtung bei 200 V (2 Minuten bei 30°C) von 21,7 cm gefunden; Q = Quotient = 1,0. Für den Abstand 2 mm wird eine Eindringtiefe von 18,7 cm (Q = 0,86) gefunden.

## Beispiel 7

a) Umsetzung Epoxidharz mit Äthylendiamin

Es werden 240 Teile Äthylendiamin auf 70°C aufgeheizt und 1393 Teile einer 70%igen toluolischen Lösung eines Diglycidylethers aus Bisphenol A und Epichlorhydrin mit einem Epoxidwert von 0,2 bei 70°C in 2 Stunden zugetropft. Nach Zulaufende wird das Lösungsmittel restlos im Vakuum abdestilliert. (Endtemperatur beim Destillieren ca. 150°C). Die Analyse ergab einen Gesamt-N-Gehalt von 4,4% wovon auf primäre N-Gruppen 1,8%, sekundäre N-Gruppen 2,5% und tertiäre N-Gruppen 0,1% entfallen. Molekulargewicht: 1430.

b) Herstellung des polymeren Oxazolidins

300 Teile des unter a) hergestellten Produktes, 128,6 Teile Toluol und 53 Teile Methylisobutylketon werden auf ca. 120° bis 130°C (Ruckfluß) aufgeheizt. Bei Rückfluß rührt man 5 Stunden lang.

Während dieser Zeit wird Wasser ausgekreist. Danach werden 80 Teile Toluol zugegeben und 40 Teile Lösungsmittel aus dem Wasserauskreiser abgetrennt. Anschließend erfolgt der Zulauf von 55 Teilen Isobutyraldehyd bei Rückfluß in 1 1/2 Stunden. Nach Zulaufende wird weitere 3 Stunden Wasser ausgekreist und anschließend werden noch 160 Teile Lösungsmittel abgetrennt. (Gesamt-$H_2O$-Menge: 38,4 Teile). Der Feststoffgehalt beträgt 77,5%.

c) Herstellung des halbblockierten Toluylendiisocyanates

Zu 696 Teilen Toluylendiisocyanat 80/20 werden 360 Teile Äthylglykol bei 15° bis 20°C in 1 Stunde zugetropft. Anschließend läßt man noch 4 Stunden bei 15° bis 20°C nachreagieren.

d) Herstellung eines Polyamins

1000 Teile einer dimeren Leinoelfettsäure (z.B. Empol 1014) und 700 Teile Dipropylentriamin werden auf 190° bis 200°C aufgeheizt. Bei 190° bis 200°C wird in 3 Stunden das Wasser abdestilliert. Anschließend wird im Vakuum destilliert bis eine Innentemperatur von ca. 200°C erreicht ist. Dann wird unter Stickstoff abgekühlt.

e) Herstellung einer kathodischen Elektrotauchlackdispersion

Es werden 170 Teile des Oxazolidins (b) unter $N_2$-Spülung auf 60°C aufgeheizt und 56,5 Teile halbblockiertes TDI (c) bei 60°C in 40 Minuten zugetropft. Das Produkt läßt man bei 60°C 45 Minuten nachreagieren und gibt dann 30 Teile des Polyamins (d) zu. Anschließend läßt man bei 90°C weiterrührenbis eine Aminzahl von 20 erreicht ist. Dann wird die Reaktion mit 6 Teilen Eisessig, 44,5 Teilen VE-Wasser und 40 Teilen Butylglykol abgebrochen. Bei 60°C im Vakuum wird das Lösungsmittel abdestilliert. Gleichzeitig läßt man 500 Teile VE-Wasser zutropfen. Der Feststoffgehalt der Dispersion beträgt 23,3%.

f) Elektrotauchlackierung

Zur Herstellung eines 10%igen Lackbades werden 428,2 Teile der 23,3%igen Dispersion (e), 0,5 Teile Eisessig und 500 ppm Blei (berechnet auf Badvolumen) als wäßrige Bleiacetatlösung mit VE-Wasser auf 1000 Teile verdünnt. Dann erfolgt die Zugabe von 25 Teilen Butylglykol und 5 Teilen Isodekanol. Das Lackbad wird 24 Stunden bei 30°C gerührt. Auf phosphatierten Stahlblechen erhält man nach der Abscheidung (2 Minuten, 150 V bei 30°C) und Härtung (20 Minuten bei 170°C einen glatten Überzug mit einer Schichtdicke von 12 $\mu$m.

Die Korrosionsprüfung nach DIN 50021 auf eisenphosphatierten Stahlblechen die mit Chromsäure nachgespült waren (Bonder® 1041) ergab nach 10 Tagen eine Unterwanderung von 2,5 bis 3,5 mm (gemessen vom Schnitt).

Beispiel 8

a) Umsetzung Epoxidharz mit Äthylendiamin

Es werden 240 Teile Äthylendiamin auf 70°C aufgeheizt und 1393 Teile einer 70%igen toluolischen Lösung eines Diglycidylethers aus Bisphenol A und Epichlorhydrin mit einem Epoxidwert von 0,2 bis 70°C in 2 Stunden zugetropft. Nach Zulaufende wird das Lösungsmittel restlos im Vakuum abdestilliert. (Endtemperatur beim Destillieren ca. 150°C). Die Analyse ergab einen Gesamt-N-Gehalt von 4,4% wovon auf primäre N-Gruppen 1,8%, sekundäre N-Gruppen 2,5% und tertiäre N-Gruppen, 0,1% entfallen. Molekulargewicht: 1430.

b) Herstellung des polymeren Oxazolidins

300 Teile des unter a) hergestellten Produktes, 128,6 Teile Toluol und 53 Teile Methylisobutylketon werden auf ca. 120° bis 130°C (Rückfluß) aufgeheizt. Bei Rückfluß rührt man 5 Stunden. Während dieser Zeit wird Wasser ausgekreist. Danach werden 80 Teile Toluol zugegeben und ca. 40 Teile Lösungsmittel aus dem Wasserauskreiser abgetrennt. Anschließend erfolgt der Zulauf von 55 Teilen Isobutyraldehyd bei Rückfluß in 1 1/2 Stunden. Nach Zulaufende wird weitere 3 Stunden Wasser ausgekreist und dann werden noch 60 Teile Lösungsmittel abgetrennt. (Gesamt-$H_2O$-Menge: 38,4 Teile). Der Feststoffgehalt des Oxazolidins beträgt 77,5%.

c) Herstellung des halbblockierten Toluylendiisocyanates

Zu 696 Teilen Toluylendiisocyanat 80/20 werden 360 Teile Äthylglykol bei 15° bis 20°C in 1 Stunde zugetropft. Anschließend läßt man noch 4 Stunden bei 15° bis 20°C nachreagieren.

d) Herstellung eines Polyamins

1000 Teile einer dimeren Leinoelfettsäure (z.B. Empol® 1014) und 700 Teile Dipropylentriamin werden auf 190° bis 200°C aufgeheizt. Bei 190° bis 200°C wird in 3 Stunden das Wasser abdestilliert. Anschließend wird im Vakuum destilliert bis eine Innentemperatur von ca. 200°C erreicht ist. Man läßt unter Stickstoff abkühlen.

e) Herstellung einer kathodischen Elektrotauchlackdispersion

Es werden 258 Teile des Oxazolidins (b) und 42,2 Teile Toluol unter $N_2$-Spülung auf 60°C aufgeheizt und 107,7 Teile halbblockiertes TDI (c) bei 60°C in 40 Minuten zugetropft. Das Produkt läßt man bei 60°C 45 Minuten nachreagieren und gibt dann 46,2 Teile des Polyamins (d) zu. Anschließend läßt man bei 90°C weiterrühren bis eine Aminzahl von 13 erreicht ist. Die Reaktion wird bei Aminzahl 13 mit 7,7 Teilen Eisessig und 22,3 Teilen VE-Wasser abgebrochen. Dann wird bei 60°C im Vakuum das Lösungsmittel abdestilliert. Gleichzeitig läßt man 130 Teile VE-Wasser zutropfen. Der Festgehalt der Dispersion beträgt 41,3%.

f) Elektrotauchlackierung

Zur Herstellung eines 10%igen Lackbades werden 242 Teile der 41,3%igen Dispersion (e), 5 Teile Butylglykol und 5 Teile Isodekanol mit VE-Wasser auf 1000 Teile verdünnt. Das Lackbad wird 48 Stunden bei Raumtemperatur (ca. 23°C) gerührt; es hat einen pH-Wert von 6,9, Leitwert: $0.8.10^{-3}$ $S.cm^{-1}$. Nach 48 Stunden Ausrühren erfolgt die Zugabe von 15 Teilen Butylglykol. Auf phosphatierten Stahlblechen erhält man nach der Abscheidung (2 Minuten, 100 V bei Raumtemperature) und Härtung (20 Minuten bei 180°C) einen glatten Überzugmit einer Schichtdicke von 13 bis 15 $\mu$m.

Die Korrosionsprüfung nach DIN 50021 auf eisenphosphatierten Stahlblechen die mit Chromsäure nachgespült waren ergab nach 10 Tagen eine Unterwanderung von 0,8 bis 3 mm (gemessen vom Schnitt).

Beispiel 9

a) Umsetzung Epoxidharz mit Äthylendiamin

Es werden 180 Teile Äthylendiamin auf 70°C aufgeheizt und 1393 Teile einer 70%igen toluolischen Lösung eines Diglycidylethers aus Bisphenol A und Epichlorhydrin mit einem Epoxidwert von 0,2 bei 70°C in 2 Stunden zugetropft. Nach Zulaufende wird das Lösungsmittel restlos im Vakuum abdestilliert. (Endtemperatur beim Destillieren ca. 150°C). Die Analyse ergab einen Gesamt N-Gehalt von 4,1%, wovon auf primäre N-Gruppen 1,5%, sekundäre N-Gruppen 2,4% und tertiäre N-Gruppen 0,2% entfallen. Molekulargewicht: 1650.

b) Herstellung des polymeren Oxazolidins

500 Teile des unter a) hergestellten Produktes, 81,4 Teile Leinoelfettsäure (z.B. Nouracid® LE 80) und 0,05 Teile Hydrochinon werden unter $N_2$-Spülung auf 180°C aufgeheizt und 5 Stunden bei dieser Temperatur gerührt. Während dieser Zeit wird das Reaktionswasser abdestilliert. Danach kühlt man auf

120° bis 130°C und tropft innerhalb 1 Stunde 400 Teile Toluol und 40 Teile Methylisobutylketon zu. Bei 120° bis 130°C rührt man 3 Stunden. Während dieser Zeit wird Wasser ausgekreist. Anschließend werden ca. 120 Teile Lösungsmittel aus dem Wasserauskreiser abgetrennt und durch 100 Teile Toluol ersetzt. Dann erfolgt der Zulauf von 60 Teilen Isobutyraldehyd bei ca. 120°C (Rückflüß) in 1 1/2 Stunden. Nach Zulaufende werden weitere 5 Stunden Wasser ausgekreist und nochmals 100 Teile Lösungsmittel abgetrennt. (Gesamt-$H_2O$-Menge: 53 Teile). Der Feststoffgehalt des Produktes beträgt 86,6%.

c) Herstellung des halbblockierten Toluylendiisocyanates

Zu 696 Teilen Toluylendiisocyanat 80/20 werden 360 Teile Äthylenglykol bei 15°C bis 20°C in 1 Stunde zugetropft. Anschließend läßt man noch 4 Stunden bei 15° bis 20°C nachreagieren.

d) Herstellung der kathodischen Elektrotauchlackdispersion

Es werden 300,3 Teile des Oxazolidins (b) unter $N_2$-Spülung auf 60°C aufgeheizt und 85,7 Teile halbblockiertes TDI (c) bei 60°C in 40 Minuten zugetropft. Das Produkt läßt man bei 60°C 45 Minuten nachreagieren und gibt dann 18,2 Teile Tetrapropylenpentamin zu. Anschließend läßt man bei 90°C weiterrühren bis eine Aminzahl von 11 erreicht ist. Dann wird die Reaktion mit 7,6 Teilen Eisessig und 22,4 Teilen VE-Wasser abgebrochen. Bei 60°C wird im Vakuum das Lösungsmittel abdestilliert. Gleichzeitig laßt man 400 Teile VE-Wasser zutropfen. Danach werden noch 60 Teile Isopropanol zugegeben. Der Feststoffgehalt der Dispersion beträgt 34,9%.

e) Elektrotauchlackierung

Zur Herstellung eines 10%igen Lackbades werden 286,5 Teile der 34,9%igen Dispersion (d) und 5 Teilen Butylglykol mit VE-Wasser auf 1000 Teile verdünnt. Das Lackbad wird 24 Stunden bei 30°C gerührt; es hat einen pH-Wert von 7,9 und einen Leitwert von $1,25.10^{-3}$ $S.cm^{-1}$. Nach 24 Stunden Ausrühren bei 30°C erfolgt die Zugabe von 15 Teilen Butylglykol, 5 Teilen Isodekanol und 0,5 Teilen Eisessig. Nach weiteren 48 Stunden Rühren bei Raumtemperatur gibt man noch 15 Teile Butylglykol und 5 Teile Isodekanol zu.

Auf phosphatierten Stahlblechen erhält man nach der Abscheidung (2 Minuten, 150 V bei 30°C) und Härtung (20 Minuten bei 180°C) einen Überzug mit einer Schichtdicke von 8 bis 10 $\mu$m.

Die Korrosionsprüfung nach DIN 50021 auf eisenphosphatierten Stahlblechen die mit Chromsäure nachgespült waren ergab nach 10 Tagen eine Unterwanderung von 2,5 bis 4,5 mm (gemessen vom Schnitt).

Vergleichsbeispiel 1

a) Umsetzung Epoxidharz mit Äthylendiamin

Es werden entsprechend Beispiel 8a) 240 Teile Äthylendiamin auf 70°C aufgeheizt und 1393 Teile einer 70%igen toluolischen Lösung eines Diglycidylethers aus Bisphenol A und Epichlorhydrin mit einem Epoxidwert von 0,2 bei 70°C in 2 Stunden zugetropft. Nach Zulaufende wird das Lösungsmittel, restlos im Vakuum abdestilliert (Endtemperatur beim Destillieren ca. 150°C). Die Analyse ergab einen Gesamt-N-Gehalt von 4,4% wovon auf primäre N-Gruppen 1,8%, sekundäre N-Gruppen 2,5% und tertiäre N-Gruppen 0,1% entfallen. Molekulargewicht: 1430.

b) Herstellung des halbblockierten Toluylendiisocyanates

Zu 696 Teilen Toluylendiisocyanat 80/20 werden 360 Teile Äthylenglykol bei 15° bis 20°C in 1 Stunde zugetropft. Anschließend läßt man noch 4 Stunden bei 15°C bis 20°C nachreagieren.

c) Es werden 100 Teile des unter a) hergestellten Produktes aufgeschmolzen (ca. 125°C) und mit 53,8 Teilen Toluol verdünnt. Bei 60°C beginnt dann der Zulauf von 66,7 Teilen halbblockiertem TDI (b). Nach Zugabe von 4 Teilen des Zulaufes ist der Ansatz vernetzt.

Vergleichsbeispiel 2

a) Umsetzung Epoxidharz mit Äthylendiamin

Es werden entsprechend Beispiel 9a) 180 Teile Äthylendiamin auf 70°C aufgeheizt und 1393 Teile einer 70%igen toluolischen Lösung eines Diglycidylethers aus Bisphenol A und Epichlorhydrin mit einem Epoxidwert von 0,2 bei 70°C in 2 Stunden zugetropft. Nach Zulaufende wird das Lösungsmittel restlos im Vakuum abdestilliert (Endtemperatur beim Destillieren ca. 150°C). Die Analyse ergab einen Gesamt-N-Gehalt von 4,1% wovon auf primäre N-Gruppen 1,5%, sekundäre N-Gruppen 2,5% und tertiäre N-Gruppen 0,2% entfallen. Molekulargewicht: 1650.

b) Herstellung des halbblockierten Toluylendiisocyanates

Zu 696 Teilen Toluylisocyanat 80/20 werden 360 Teile Äthylglykol bei 15° bis 20°C in 1 Stunde zugetropft. Anschließend läßt man noch 4 Stunden bei 15° bis 20°C nachreagieren.

c) 180 Teile des unter a) hergestellten Produktes, 29,3 Teile Leinoelfettsäure (z.B. Nouracid® LE 80) und 0,020 Teile Hydrochinon werden auf 180°C aufgeheizt. Bei 180°C wird in 5 Stunden das Wasser abdestilliert. Anschließend kühlt man ab und verdünnt mit 113 Teilen Toluol. Nach dem Verdünnen beginnt bei 60°C der Zulauf von 139,5 Teilen halbblockiertem TDI (b). Nach Zugabe von 28,3 Teilen des Zulauf's ist der Versuch vernetzt.

**Patentansprüche**

1. Selbstvernetzende kationische Bindemittel für die kathodische Elektrotauchlackierung metallisch lietender Gegenstände, dadurch gekennzeichnet, daß sie durch Umsetzung von

(A) primäre und/oder sekundäre Amino-$\beta$-hydroxyalkylgruppen enthaltenden Derivaten von Epoxidverbindungen, wobei die Derivate ein Molekulargewicht zwischen 300 und 5000 aufweisen, und entweder Additionsprodukte ($A^1$) aus Ammoniak und Epoxidverbindungen der allgemeinen Formeln

$$R - E^1 - \left[NH-E^1\right]_{n^1} - R \qquad (II),$$

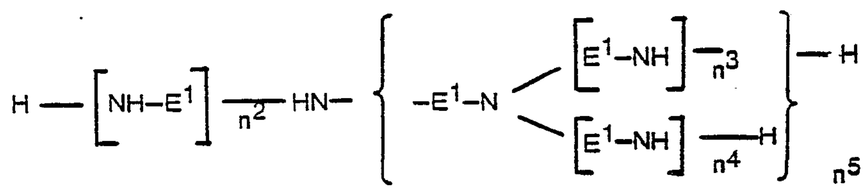

(III)

und/oder

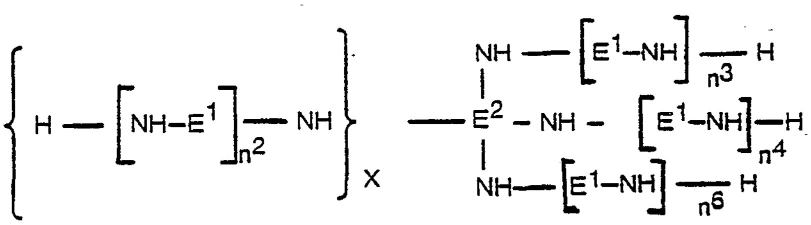

(IV)

worin R für einen S-Alkylrest mit 1 bis 12 Kohlenstoffatomen, einen Phenoxy- oder Alkylphenoxyrest mit 1 bis 18 Kohlenstoffatomen in der Alkylgruppe steht,

$E^1$ gleich oder verschiedene hydroxylgruppenhaltige zweiwertige und $E^2$ gleich oder verschiedene hydroxylgruppenhaltige drei- oder vierwertige Reste sind, wie sie durch Ringöffnung der Oxiranringe von Epoxidverbindungen mit zwei, drei oder vier Epoxidgruppen im Molekül erhältlich sind und $n^1$ für 1 bis 5; $n^2$, $n^3$, $n^4$ und $n^6$ für 0 bis 3 und $n^5$ für 1 bis 3 stehen, wobei zu deren Herstellung jeweils auf ein Äquivalent Epoxid 1,75 bis 10 Mole Ammoniak eingesetzt worden sind, oder Additionsprodukte ($A^2$) aus Diamin und Epoxidverbindungen der allgemeinen Formeln

$$R—E^1—[NH—R^3—NH—E^1]_{n^1}—R \qquad (V)$$

und/oder

$$H_2N—[R^3—NH—E^1—NH]_{n^1}—R^3—NH_2 \qquad (VI)$$

worin R, $E^1$ und $n^1$ die oben angegebene Bedeutung haben und $R^3$ für einen geradkettigen, verzweigten oder cyclischen, gegebenenfalls NH— oder Ethergruppen enthaltenden zweiwertigen Kohlenwasserstoffrest mit 2 bis 16 Kohlenstoffatomen steht, sind,
mit

(B) voll-, halb- oder teilblockierten Di- oder Polyisocyanaten und gegebenenfalls

(C) Di- oder Polyaminen

und Protonierung des Umsetzungsproduktes mit Säure erhalten worden sind, mit der Maßgabe, daß für den Fall, daß als Komponente (A) Additionsprodukte ($A^2$) eingesetzt werden, diese mit halb- oder teilblockierten Di- oder Polyisocyanaten (B) und gegebenenfalls Di- oder Polyaminen (C) umgesetzt werden, die primären und/oder sekundären Amino-β-hydroxyalkylgruppen der Komponente ($A^2$) vor der Reaktion mit der Komponente (B) mit Carbonylverbindungen der allgemeinen Formel (I)

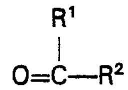

(I),

wobei $R^1$ und $R^2$ für untereinander gleiche oder verschiedene Reste stehen und Wasserstoff, aliphatische Kohlenwasserstoffreste mit 1 bis 4 Kohlenstoffatomen, cycloaliphatische Kohlenwasserstoffreste mit 5 bis 7 Kohlenstoffatomen oder aromatische Kohlenwasserstoffreste mit 6 bis 10 Kohlenwasserstoffatomen bedeuten oder zusammen mit dem Kohlenstoffatom der Carbonylgruppe miteinander zu einem 5- oder 6-gliedrigen cycloaliphatischen Kohlenwasserstoffring verbunden sind, unter Bildung eines Oxazolidinrings umgesetzt worden sind.

2. Bindemittel nach Anspruch 1, dadurch gekennzeichnet, daß ein Teil der primären und/oder sekundären Amino-β-hydroxyalkylgruppen der Komponente (A) vor der gegebenenfalls durchzuführenden Reaktion mit einer Carbonylverbindung (I) mit gesättigten oder ethylenische ungesättigten Carbonsäuren oder Carbonsäureestern mit 6 bis 24 Kohlenstoffatomen im Acylrest oder Dimerfettsäuren in Amidgruppen überführt worden ist.

3. Selbstvernetzendes Bindemittel nach Anspruch 1, dadurch gekennzeichnet, daß ein Teil der primären und/oder sekundären Aminogruppen des Additionsproduktes ($A^1$) aus Ammoniak und Epoxidverbindungen mit Monoglycidylethern aus gesättigten oder olefinisch ungesättigten Alkylphenolen mit 6 bis 18 C-Atomen in der Alkylkette oder Monoglycidylestern von gesättigten oder olefinisch ungesättigten, gegebenenfalls verzweigten Carbonsäuren mit 6 bis 24 C-Atomen im Acylrest umgesetzt worden ist.

4. Selbstvernetzendes Bindemittel nach einem der Ansprüche 1 bis 3, dadurch gekennzeichnet, daß das Di- oder Polyamin (C) 2 bis 20 primäre und/oder sekundäre Aminogruppen aufweist.

5. Selbstvernetzendes Bindemittel nach einem der Ansprüche 1 bis 4, dadurch gekennzeichnet, daß das Reaktionsprodukt aus (A) und (B) bzw. (A), (B) und (C) Aminzahlen von 10 bis 150 mg KOH/g Feststoff aufweist.

6. Selbstvernetzendes Bindemittel nach einem der Ansprüche 1 bis 5, dadurch gekennzeichnet, daß die Reaktionsprodukte aus (A) und (B) bzw. (A), (B) und (C) Aminzahlen von 25 bis 75 mg KOH/g Feststoff aufweisen.

7. Bindemittel nach Anspruch 1 oder 2, dadurch gekennzeichnet, daß die durch Umsetzung von primären Amino-β-hydroxyalkylgruppen der Komponente ($A^1$) mit der Carbonylverbindung (I) erhaltene NH-Gruppe des Oxazolidinrings vor der Reaktion mit der Komponente (B) mit einer Epoxidverbindung umgesetzt worden ist.

8. Bindemittel nach Anspruch 7, dadurch gekennzeichnet, daß als Epoxidverbindung für die Umsetzung der NH-Gruppe des Oxazolidinrings vor der Reaktion mit der Komponente (B) eine Monoepoxidverbindung verwendet wird.

9. Bindemittel nach Anspruch 1 oder 2, dadurch gekennzeichnet, daß als Carbonylverbindung (I) ein Aldehyd verwendet wird.

10. Bindemittel nach Anspruch 1 oder 2, dadurch gekennzeichnet, daß die primären Aminogruppen der Formel (VI) der Komponente ($A^2$) vor der Reaktion mit der Komponente (B) mit Ketonen der Formel (I) in Ketimine überführt worden sind.

11. Verfahren zur Herstellung der Bindemittel nach einem der Ansprüche 1 bis 10, dadurch gekennzeichnet, daß nach der Umsetzung der Komponente (A) mit der Komponente (B) und gegebenenfalls der Komponente (C) das Umsetzungsprodukt mit einer Carbonsäure protoniert wird und nach Zugabe von Wasser die bei Hydrolyse abgespaltenen Carbonylverbindungen, gegebenenfalls im Gemisch mit organischen Lösungsmittel und unter gleichzeitiger Zufuhr weiteren Wassers, als azeotropes Gemisch mit Wasser destillativ entfernt werden.

12. Verwendung der Bindemittel nach einem der vorhergehenden Ansprüche für die kathodische Elektrotauchlackierung elektrisch leitender Flächen.

**Revendications**

1. Liants cationiques autoréticulants pour la peinture par électrodéposition cathodique d'objets à conductibilité métallique, caractérisés par le fait qu'ils ont été obtenus par réaction

(A) de dérivés, contenant des groupes amino-β-hydroxyalkyle primaires et/ou secondaires, de composés époxy, ces dérivés ayant un poids moléculaire compris entre 300 et 5000, et soit de produits d'addition ($A^1$) d'ammoniac et de composés époxy de formules générales

$$R-E^1-\left[NH-E^1\right]_{n^1}-R \qquad (II),$$

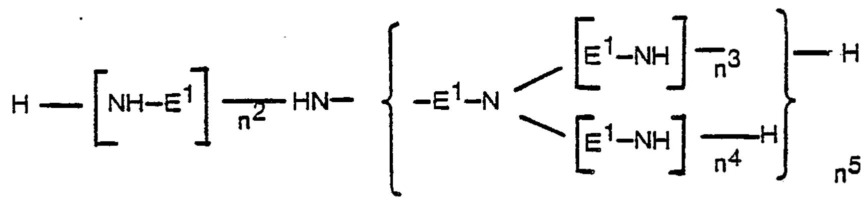

(III)

et/ou

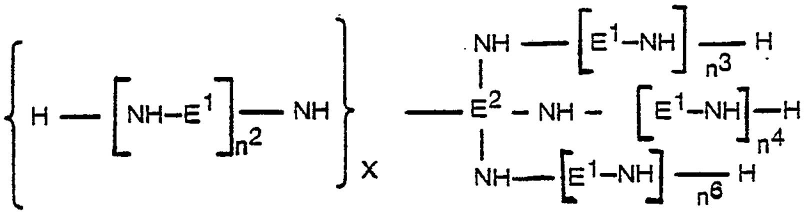

(IV)

dans lesquelles R représente un reste alkyle de 1 à 12 atomes de carbone, un reste phénoxy ou alkyle de 1 à 18 atomes de carbone dans le groupe alkyle, $E^1$ sont des restes divalents à groupes hydroxyle identiques ou différents et $E^2$ des restes tri-ou quadrivalents à groupes hydroxyle identiques ou différents tels qu'ils sont préparables par ouverture de cycle du cycle oxiranne des composés époxy à deux, trois ou quatre groupes époxy dans la molécule et $n^1$ est mis pour 1 à 5; $n^2$, $n^3$, $n^4$ et $n^6$ pour 0 à 3 et $n^5$ pour 1 à 3, 1,75 à 10 moles d'ammoniac sur un équivalent époxy ayant été employées chaque fois pour leur préparation, soit des produits d'addition ($A^2$) de diamine et de composés époxy de formules générales

$$R—E^1—[NH—R^3—NH—E^1]_{n^1}—R \qquad (V)$$

et/ou

$$H_2N—[R^3—NH—E^1—NH]_{n^1}—R^3—NH_2 \qquad (VI)$$

dans lesquelles R, $E^1$ et $n^1$ ont les significations sus-mentionnées et $R^3$ représente un reste d'hydrocarbure bivalent, de 2 à 16 atomes de carbone, à chaîne droit, ramifiée ou cyclique, contenant éventuellement des groupes NH ou éther,

avec

(B) des di-ou polyisocyanates totalement, demi- ou partiellement bloqués et éventuellement

(C) des di-ou polyamines

et protonisation du produit de réaction avec des acides, sous réserve que, dans le cas où on utilise, comme composants (A), des produits d'addition ($A^2$), ceux-ci soient mis à réagir avec des di-ou polyisocyanates (B) demi- ou partiellement bloqués et éventuellement des di- ou polyamines (C), les groupes amino-$\beta$-hydroxyalkyle primaires et/ou secondaires des composants ($A^2$) ayant été mis à réagir, en formant un noyau oxazolidine, avec des composés carbonyle de formule générale (I)

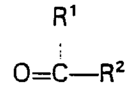

(I),

$R^1$ et $R^2$ représentent des restes identiques ou différents et signifiant l'hydrogène, des restes d'hydrocarbures aliphatiques de 1 à 4 atomes de carbone, des restes d'hydrocarbures cycloaliphatiques de 5 à 7 atomes de carbone ou des restes d'hydrocarbures aromatiques de 6 à 10 atomes de carbone ou sont reliés entre eux avec l'atome de carbone du groupe carbonyle pour former un noyau d'hydrocarbure cycloaliphatique à 5 ou 6 chaînons.

2. Liants selon la revendication 1, caractérisés par le fait qu'une partie des groupes amino-$\beta$-hydroxyalkyle primaires et/ou secondaires des composants (A) ont, avant la réaction à effectuer éventuellement avec un composé carbonyle (I), été transformés en groupes amide avec des acides carboxyliques saturés où éthyléniquement insaturés ou des esters d'acides carboxyliqués de 6 à 24 atomes de carbone dans le reste acyle ou des acides gras dimères.

3. Liants autoréticulants selon la revendication 1, caractérisés par le fait qu'on a fait réagir une partie des groupes amino primaires et/ou secondaires, du produit d'addition ($A^1$) d'ammoniac et de composés époxy, avec des éthers monoglycidyliques d'alkylphénols saturés ou oléfiniquement insaturés, de 6 à 18 atomes-C dans la chaîne alkyle, ou des esters monoglycidyliques d'acides carboxyliques saturés ou à insaturation oléfinique, éventuellement ramifiés, de 6 à 24 atomes-C dans le reste acyle.

4. Liants autoréticulants selon l'une des revendications 1 à 3, caractérisés par le fait que la di- ou polyamine (C) contient 2 à 20 groupes amino primaires et/ou secondaires.

5. Liants autoréticulants selon l'une des revendications 1 à 4, caractérisés par le fait que le produit de réaction de (A) et (B) ou (A), (B) et (C) présente un indice d'amine de 10 à 150 mg KOH/g de matière solide.

6. Liants autoréticulants selon l'une des revendications 1 à 5, caractérisés par le fait que les produits de réaction de (A) et (B) ou (A), (B) et (C) présentent des indices d'amine de 25 à 75 mg KOH/g de produit solide.

7. Liants selon la revendications 1 ou 2, caractérisés par le fait que le groupe NH du noyau oxazolidine obtenu par réaction de groupes amino-$\beta$-hydroxyalkyle primaires des composants ($A^1$) ont, avant la réaction avec les composants (B), été mis à réagir avec un composé époxy.

8. Liants selon la revendication 7, caractérisés par le fait qu'on utilise un composé monoépoxy comme composé époxy pour la réaction du groupe NH du noyau oxazolidine avant la réaction avec les composants (B).

9. Liants selon les revendications 1 ou 2, caractérisés par le fait qu'on utilise, comme composé carbonyle (I), un aldéhyde.

10. Liants selon les revendications 1 ou 2, caractérisés par le fait que les groupes amino primaires de formule (VI) des composants ($A^2$) ont, avant la réaction avec les composants (B), été transformés en cetimines avec des cétones de formule (I).

11. Procédé de préparation des liants selon l'une des revendications 1 à 10, caractérisé par le fait qu'après la réaction des composants (A) avec les composants (B) et éventuellement les composants (C), le produit de réaction est protoné avec un acide carboxylique et, après addition d'eau, les composés carbonyle séparés par hydrolyse, éventuellement en mélange avec des solvants organiques et apport simultané d'un supplément d'eau, sont éliminés par distillation sous forme de mélange azéotrope avec de l'eau.

12. Utilisation des liants selon l'une des revendications 1 à 11, pour la peinture par électrodéposition cathodique de surfaces conductrices de l'électricité.

## Claims

1. Self-crosslinking cationic binders for the cathodic electrocoating of metallic, conductive articles, wherein the binders have been obtained by reacting

(A) derivatives of epoxide compounds, which contain primary and/or secondary amino-$\beta$-hydroxyalkyl groups and have molecular weights of from 300 to 5,000, and either adducts ($A^1$) of ammonia and epoxide compounds of the general formulae

$$R - E^1 - \left[ NH - E^1 \right]_{n^1} - R \qquad (II),$$

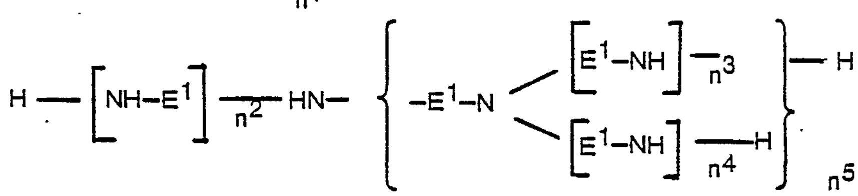

(III)

and/or

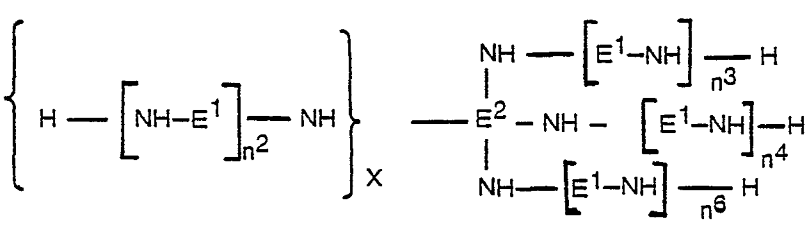

(IV)

where R is S-alkyl of 1 to 12 carbon atoms, or phenoxy or alkylphenoxy, where alkyl is of 1 to 18 carbon atoms, the $E^1$'s are identical or different hydroxyl-containing divalent radicals and the $E^2$'s are identical or different hydroxyl-containing trivalent or tetravalent radicals, resulting from the opening of the oxirane rings of epoxide compounds containing two, three or four epoxide groups in the molecule, and $n^1$ is from 1 to 5, $n^2$, $n^3$, $n^4$ and $n^6$ are from 0 to 3 and $n^5$ is from 1 to 3, 1.75 to 10 moles of ammonia per epoxide equivalent having been used for the production thereof, or adducts ($A^2$) of diamine and epoxide compounds of the general formulae

$$R—E^1—[NH—R^3—NH—E^1]_{n^1}—R \qquad (V)$$

and/or

$$H_2N—[R^3—NH—E^1—NH]_{n^1}—R^3—NH_2 \qquad (VI)$$

where R, $E^1$ and $n^1$ have the above meanings, and $R^3$ is a linear, branched or cyclic divalent hydrocarbon radical of 2 to 16 carbon atoms which may or may not contain NH groups or ether groups, with

(B) completely blocked, semi-blocked or partially blocked diisocyanates or polyisocyanates, with or without

(C) diamines or polyamines,

and protonizing the reaction products with an acid,
with the proviso that, if adducts ($A^2$) are used as component (A), they are reacted with semi-blocked or partially blocked diisocyanates or polyisocyanates (B), with or without diamines or polyamines (C), and the primary and/or secondary amino-$\beta$-hydroxyalkyl groups of component ($A^2$) have, prior to the reaction with component (B), been reacted, to form an oxazolidine ring, with a carbonyl compound of the general formula (I)

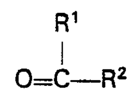

(I),

where $R^1$ and $R^2$ may be identical or different and each is hydrogen, an aliphatic hydrocarbon radical of 1 to 4 carbon atoms, a cycloaliphatic hydrocarbon radical of 5 to 7 carbon atoms or an aromatic hydrocarbon radical of 6 to 10 carbon atoms, or $R^1$ and $R^2$, conjointly with the carbon atom of the carbonyl group, are linked to form a 5-membered or 6-membered cycloaliphatic hydrocarbon ring.

2. A binder as claimed in claim 1, wherein some of the primary and/or secondary amino-$\beta$-hydroxyalkyl groups of component (A) have, prior to the optional reaction with a carbonyl compound (I), been converted to amide groups by reaction with saturated or ethylenically unsaturated carboxylic acids or carboxylic acid esters where acyl is of 6 to 24 carbon atoms, or dimeric fatty acids.

3. A self-crosslinking binder as claimed in claim 1, wherein some of the primary and/or secondary amino groups of the adduct ($A^1$) of ammonia and epoxide compounds have been reacted with monoglycidyl ethers of saturated or olefinically unsaturated alkylphenols, where alkyl is of 6 to 18 carbon atoms, or with monoglycidyl esters of saturated or olefinically unsaturated, linear or branched carboxylic acids, where acyl is of 6 to 24 carbon atoms.

4. A self-crosslinking binder as claimed in any of claims 1 to 3, wherein the diamine or polyamine (C) has from 2 to 20 primary and/or secondary amino groups.

5. A self-crosslinking binder as claimed in any of claims 1 to 4, wherein the reaction product of (A) and (B) or of (A), (B) and (C) has an amine number of from 10 to 150 mg of KOH/g of solids.

6. A self-crosslinking binder as claimed in any of claims 1 to 5, wherein the reaction product of (A) and (B) or of (A), (B) and (C) has an amine number of from 25 to 75 mg of KOH/g of solids.

7. A binder as claimed in claim 1 or 2, wherein the NH group of the oxazolidine ring, resulting from the reaction of primary amino-$\beta$-hydroxyalkyl groups of component ($A^1$) with the carbonyl compound (I), has been reacted with an epoxide compound prior to the reaction with component (B).

8. A binder as claimed in claim 7, wherein the epoxide compound used for the reaction of the NH group of the oxazolidine ring, prior to the reaction with component (B), is a monoepoxide compound.

9. A binder as claimed in claim 1 or 2, wherein an aldehyde is used as the carbonyl compound (I).

10. A binder as claimed in claim 1 or 2, wherein the primary amino groups of component ($A^2$) of the formula (VI) are converted into ketimine groups by means of ketones of the formula (I), prior to the reaction with component (B).

11. A process for the production of a binder as claimed in any of claims 1 to 10, wherein, after the reaction of component (A) with component (B), with or without component (C), the reaction product is protonized with a carboxylic acid, and, after the addition of water, the carbonyl compounds split off on hydrolysis are removed by distillation as an azeotropic mixture with water, which may or may not be mixed with an organic solvent, additional water being added during the distillation, if appropriate.

12. The use of a binder as claimed in any of the preceding claims for the cathodic electrocoating of electrically conductive surfaces.